(19) Europäisches Patentamt
European Patent Office
Office européen des brevets

(11) **EP 4 357 691 A1**

(12) **EUROPEAN PATENT APPLICATION**
published in accordance with Art. 153(4) EPC

(43) Date of publication:
**24.04.2024 Bulletin 2024/17**

(21) Application number: **22825073.4**

(22) Date of filing: **16.06.2022**

(51) International Patent Classification (IPC):
**F24F 11/64** *(2018.01)* **F24F 8/108** *(2021.01)*
**F24F 11/70** *(2018.01)* **F24F 11/79** *(2018.01)*
**F24F 110/10** *(2018.01)* **F24F 110/20** *(2018.01)*
**F24F 110/65** *(2018.01)*

(52) Cooperative Patent Classification (CPC):
**F24F 8/108; F24F 11/64; F24F 11/70; F24F 11/79;**
F24F 2110/10; F24F 2110/20; F24F 2110/65;
Y02B 30/70

(86) International application number:
**PCT/JP2022/024223**

(87) International publication number:
**WO 2022/265085 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.06.2021 CN 202110671442
17.06.2021 CN 202110671095**

(71) Applicant: **Daikin Industries, Ltd.
Osaka-shi, Osaka 530-0001 (JP)**

(72) Inventors:
• **QUAN, Meilin
Osaka-shi, Osaka 530-0001 (JP)**
• **GAN, Quan
Osaka-shi, Osaka 530-0001 (JP)**

(74) Representative: **Global IP Europe
Patentanwaltskanzlei
Pfarrstraße 14
80538 München (DE)**

(54) **CONTROL METHOD AND DEVICE FOR PURIFICATION EQUIPMENT, AND PURIFICATION EQUIPMENT**

(57) The present invention provides a control method and device for purification equipment, and purification equipment. Since the purification equipment is controlled according to a concentration distribution of particulate matter with different particle sizes in an indoor space, targeted control of the particulate matter with different particle sizes can be performed, purification efficiency and speed can be increased, and good purification effect can be achieved quickly and highly efficiently.

EP 4 357 691 A1

SPECIFY CONCENTRATION DISTRIBUTION OF PARTICULATE MATTER WITH DIFFERENT PARTICLE SIZES IN INDOOR SPACE
101

CONTROL AT LEAST ONE EQUIPMENT PARAMETER OF PURIFICATION EQUIPMENT ACCORDING TO CONCENTRATION DISTRIBUTION OF PARTICULATE MATTER WITH DIFFERENT PARTICLE SIZES IN INDOOR SPACE
102

SPECIFY CONCENTRATION DISTRIBUTIONS OF POLLUTANTS OTHER THAN PARTICULATE MATTER IN INDOOR SPACE
103

CONTROL, ACCORDING TO CONCENTRATION DISTRIBUTIONS OF OTHER POLLUTANTS IN INDOOR SPACE, AT LEAST ONE EQUIPMENT PARAMETER OF PURIFICATION EQUIPMENT
104

CONTROL, BASED ON DETECTION RESULT OF OBSTACLES AROUND PURIFICATION EQUIPMENT, AT LEAST ONE OF OPENING/CLOSING NUMBERS, OPENING/CLOSING RANGES, AND OPENING/CLOSING ANGLES OF SUCTION PORT AND BLOW-OUT PORT
105

FIG. 1

**Description**

**TECHNICAL FIELD**

The present invention relates to the field of air purification and in particular to a control method and device for purification equipment, and purification equipment.

**BACKGROUND ART**

As people's demands for quality of life increase, air pollution becomes more and more serious. Therefore, air purification technology is gradually receiving attention.

The particulate matter in the atmosphere, as one of the main pollutants in indoor air, affects the health of the people in the room. Most conventional air purification technologies and air purifier products, focus only on the total amount of the particulate matter in the room. In ordinary conventional technologies, the total number and/or total concentration of the particulate matter in the room is detected to adjust the air volume, so as to achieve the purpose of quickly purifying the indoor air.

In recent years, some conventional techniques for controlling blow-out amount based on various detection data have appeared.

PTL 1 discloses an air purifier that changes, by detecting the particle size of a target in a detection region, the amount of the air blown out by a fan, the position of a panel, and the area of a ventilation window.

PTL 2 discloses an air purifier that adjusts a blow-out angle and an air volume until reaching an optimal state by detecting indoor information such as indoor area, obstacle, and the distance to a wall surface.

PTL 3 discloses a control system and method for an air purifier that specify different operating modes including a wind speed switching mode, a power-on mode, and a power-off mode in different ranges by comparing concentration of pollutants in only one time period with a preset range.

PTL 4 discloses an energy-saving control method for an air purifier, which can display the current air quality status in real time even when the air pollution concentration is detected and it is determined that the comfort level of the air quality is good, and in which the motor, buzzer, auxiliary function part, and auxiliary function display part on an air purifier display screen are all in the operation stop state, but when the air quality becomes poor, the operation by the operation member in the air purifier is restarted, thereby only improving the two states of an operation state and a stop state by the current air purifier.

It should be noted that the introduction of the above technical background is merely intended to facilitate understanding of those skilled in the art, and to facilitate a clearer and more complete description of the technical solutions of the present invention. The above technical solutions should not be construed as being known to those skilled in the art just because they are described in Background Art of the present invention.

**SUMMARY OF THE INVENTION**

However, the inventor has found that, in the above conventional technologies, even if the total amount of the particulate matter does not change, influence of concentration distribution of the particulate matter with different particle sizes on the indoor air quality is very important; therefore, if the air purifier is controlled only based on the total concentration of the particulate matter in the room, the purification of the particulate matter with different particle sizes cannot be better performed, i.e., targeted purification cannot be performed, purification efficiency is low, and energy saving cannot be achieved well.

In addition, in PTL 1, the air purifier changes the output of the fan based on only the diameter of the particulate matter to be detected which is output from a pollutant detection unit and the diameter of the particulate matter to be detected which has passed through the detection region. Variations in the distribution of the particulate matter with different particle sizes in the room are not considered. For example, since the particulate matter in the detection region has been purified, only particulate matter with small particle size is present in the detection region around the purifier, but a large amount of particulate matter with large particle size is present in other regions. In such a case, the air volume, the position of the panel, and the area of the ventilation window controlled by a control unit do not match the actual distribution state of the particulate matter in the room, and a thorough purification effect cannot be obtained.

In PTL 2, the air purifier adjusts the blow-out angle of a blow-out port and the air volume by fluctuation of a wind-guide device based on the detection information of the room detected by an external detection device. However, the distribution state of the particulate matters in the room is not considered. In addition, in the control of a human avoidance mode, in a case where the blow-out port becomes small and the wind speed becomes high while the air volume remains unchanged, people feel uncomfortable, and at the same time, purification area also becomes small.

In PTL 3, current pollutant concentration data is used to control the air purifier to operate in different modes; however, since the control is performed only based on the current pollutant concentration data, continuous detection is required, and therefore the processing speed is slow, and the energy saving performance of the device is poor.

In PTL 4, the air purifier is controlled by determining the comfort level of air quality based on an air pollution concentration detected in real time; however, since continuous detection is also required, the processing speed is slow, and the energy-saving performance of the device is poor.

In order to solve at least one of the above problems, the embodiments of the present invention provide a control method and device for purification equipment, and purification equipment; the purification equipment is controlled according to the concentration distribution of particulate matter with different particle sizes in the indoor space, so that targeted control of the particulate matter with different particle sizes can be performed, purification efficiency and speed can be improved, and good purification effect can be achieved quickly and highly efficiently. And/or, pollutant concentration distribution at a plurality of times after the current time is predicted according to collected current environmental parameters, and the purification equipment is controlled according to the predicted pollutant concentration distribution, so that the state of the pollutant concentration distribution in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

According to a first aspect of embodiments of the present invention, there is provided a control method for purification equipment, including: a step of specifying a concentration distribution of particulate matter with different particle sizes in an indoor space; and a step of controlling, according to the concentration distribution of particulate matter with different particle sizes in the indoor space, at least one equipment parameter of the purification equipment.

According to a second aspect of embodiments of the present invention, there is provided a control method for purification equipment, including: a step of acquiring an environmental parameter of an indoor space; a step of predicting, based on the environmental parameter, pollutant concentration distributions at a plurality of times after a current time; and a step of controlling at least one equipment parameter of the purification equipment according to the pollutant concentration distributions at a plurality of times after the current time.

According to a third aspect of embodiments of the present invention, there is provided a control device for purification equipment, including: a specifying unit configured to specify a concentration distribution of particulate matter with different particle sizes in an indoor space; and a first control unit configured to control at least one equipment parameter of the purification equipment according to the concentration distribution of particulate matter with different particle sizes in the indoor space.

According to a fourth aspect of embodiments of the present invention, there is provided a control device for purification equipment, including: an acquisition unit configured to acquire an environmental parameter of an indoor space; a prediction unit configured to predict, based on the environmental parameter, pollutant concentration distributions at a plurality of times after a current time; and a second control unit configured to control at least one equipment parameter of the purification equipment according to the pollutant concentration distributions at a plurality of times after the current time.

According to a fifth aspect of embodiments of the present invention, there is provided purification equipment, including the control device for purification equipment according to the third or fourth aspect of the embodiments of the present invention, configured to control at least one equipment parameter of the purification equipment.

One of advantageous effects of the embodiments of the present invention is as follows. Since the purification equipment is controlled according to a concentration distribution of particulate matter with different particle sizes in the indoor space, targeted control of the particulate matter with different particle sizes can be performed, purification efficiency and speed can be increased, and good purification effect can be achieved quickly and highly efficiently.

Further, since pollutant concentration distributions at a plurality of times after the current time are predicted based on collected current environmental parameters, and since the purification equipment is controlled according to the predicted pollutant concentration distributions, the state of the pollutant concentration distributions in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

The feature information described and illustrated in one embodiment may be used in the same or similar form in one or more other embodiments, may be used in combination with the features of the other embodiments, or may be used instead of the feature information of the other embodiments.

It should be emphasized that the term "comprising/including" is used in this specification to specify the presence of feature information, an integer, a step, or a component, but does not preclude the presence or addition of one or more other feature information, integers, steps, or components.

## BRIEF DESCRIPTION OF THE DRAWINGS

Many aspects of the present invention can be better understood with reference to the following accompanying drawings. The components in the accompanying drawings are not drawn proportionally, but are merely illustrative of the principles of the present invention. For the purpose of convenient representation and description of some parts according to the present invention, the parts corresponding to the accompanying drawings may be enlarged or reduced. Elements or feature information illustrated in one accompanying drawing or one embodiment according to the present invention can be combined with elements or feature information illustrated in one or more other accompanying drawings or embodiments. Further, in the accompanying drawings, like reference numerals designate corresponding members throughout the several accompanying drawings, and can also be used to designate corresponding elements in one or more embodiments.

In the accompanying drawings:

Fig. 1 is a flowchart of a control method for purification equipment according to Embodiment 1 of the present invention.

Fig. 2 is a flowchart of a method for implementing step 101 in Embodiment 1 of the present invention.

Fig. 3 is an exemplary diagram of a look-up table in Embodiment 1 of the present invention.

Fig. 4 is a diagram showing a relationship between the number and concentration distribution of particulate matters in the room and ventilation and natural wind in Embodiment 1 of the present invention.

Fig. 5 is a flowchart of another method for implementing step 101 in Embodiment 1 of the present invention.

Fig. 6 is a flowchart of a method for training a first neural network model according to Embodiment 1 of the present invention.

Fig. 7 is a schematic diagram showing a time when training the first neural network according to Embodiment 1 of the present invention.

Fig. 8 is a flowchart of further another method for implementing step 101 in Embodiment 1 of the present invention.

Fig. 9 is a schematic diagram of fitting the concentration distribution of the particulate matter in the room in Embodiment 1 of the present invention.

Fig. 10 is a flowchart of further another method for implementing step 101 in Embodiment 1 of the present invention.

Fig. 11 is a flowchart of further another method for implementing step 101 in Embodiment 1 of the present invention.

Fig. 12 is a schematic diagram for predicting a concentration distribution in Embodiment 1 of the present invention.

Fig. 13 is a flowchart of further another method of implementing step 101 in Embodiment 1 of the present invention.

Fig. 14 is a diagram showing several examples of controlling a suction port and a blow-out port according to obstacles in Embodiment 1 of the present invention.

Fig. 15 is a flowchart of a method for implementing step 102 in Embodiment 1 of the present invention.

Fig. 16 is a flowchart of a control method for purification equipment according to Embodiment 2 of the present invention.

Fig. 17 is a flowchart of a method of training a prediction model according to Embodiment 2 of the present invention.

Fig. 18 is a schematic diagram showing input data of four channels obtained in step 1701 in Embodiment 2 of the present invention.

Fig. 19 is a schematic diagram of each channel passing through a Long Short-Term Memory (LSTM) neural network in step 1702 in Embodiment 2 of the present invention.

Fig. 20 is a schematic diagram of predicting the concentration distribution according to Embodiment 2 of the present invention.

Fig. 21 is another flowchart of the control method for purification equipment according to Embodiment 2 of the present invention.

Fig. 22 is a flowchart of a method for implementing step 1603 in Embodiment 2 of the present invention.

Fig. 23 is a flowchart of another method for implementing step 1603 in Embodiment 2 of the present invention.

Fig. 24 is further another flowchart of the control method for purification equipment according to Embodiment 2 of the present invention.

Fig. 25 is a schematic diagram of a control device for purification equipment according to Embodiment 3 of the present invention.

Fig. 26 is a schematic diagram of a control device for purification equipment according to Embodiment 4 of the present invention.

Fig. 27 is a structural diagram of purification equipment according to Embodiment 5 of the present invention.

Fig. 28 is a schematic diagram of a plurality of states of first wind-guide plates according to Embodiment 5 of the present invention.

Fig. 29 is a schematic diagram of two states of third wind-guide plates according to Embodiment 5 of the present invention.

## DESCRIPTION OF EMBODIMENTS

Hereinafter, preferred embodiments of the present invention will be described with reference to the drawings.

<Embodiment 1>

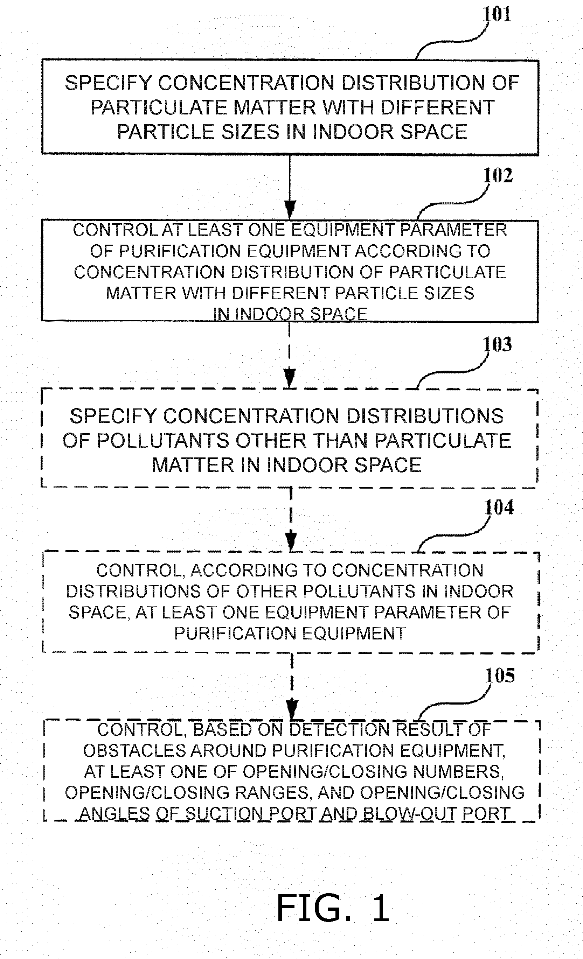

Embodiment 1 of the present invention provides a control method for purification equipment. Fig. 1 is a flowchart of the control method for purification equipment according to Embodiment 1 of the present invention. As shown in Fig. 1, the method includes the following steps.

Step 101: specifying a concentration distribution of particulate matter with different particle sizes in the indoor space, and

Step 102: controlling at least one equipment parameter of the purification equipment according to the concentration distribution of particulate matter with different particle sizes in the indoor space.

Thus, the purification equipment is controlled according to the concentration distribution of particulate matter with different particle sizes in the indoor space, so that targeted control of the particulate matter with different particle sizes can be performed, purification efficiency and speed can be increased, and good purification effect can be achieved quickly and highly efficiently.

In the embodiment of the present invention, for example, the concentration distribution may refer to a two dimensional distribution of a distribution of different particle sizes and a distribution of the number of each particle size.

In the embodiment of the present invention, the purification equipment may be various types of purification equipment. For example, the purification equipment may be an air purifier, a fresh air device, or an air conditioner with an air purification function.

In the embodiments of the present invention, the purification equipment may be purification equipment for household use, purification equipment for commercial use, or purification equipment for public use.

For example, the purification equipment may be used in a residential environment, in a commercial environment such as an office, an office building, a shopping mall or the like, or in a public environment such as a school or the like.

In the embodiment of the present invention, the control method for purification equipment may be executed by the purification equipment. For example, the control method may be executed by a controller of the purification equipment.

In step 101, the concentration distribution of particulate matter with different particle sizes in the indoor space is specified.

In the embodiment of the present invention, the particulate matter with different particle sizes may be largely divided into, for example, particulate matter with large particle size and particulate matter with small particle sizes.

Alternatively, the particulate matter with different particle sizes may be separated according to a unified standard, for example, particulate matter PM10, particulate matter PM2.5 and the like.

In the embodiments of the present invention, the concentration distribution of the particulate matter in the indoor space refers to the concentration distribution of particulate matter at different spatial positions in the room, for example, the concentration distribution of particulate matter at different heights in the room.

A method for implementing step 101 will be described in detail below.

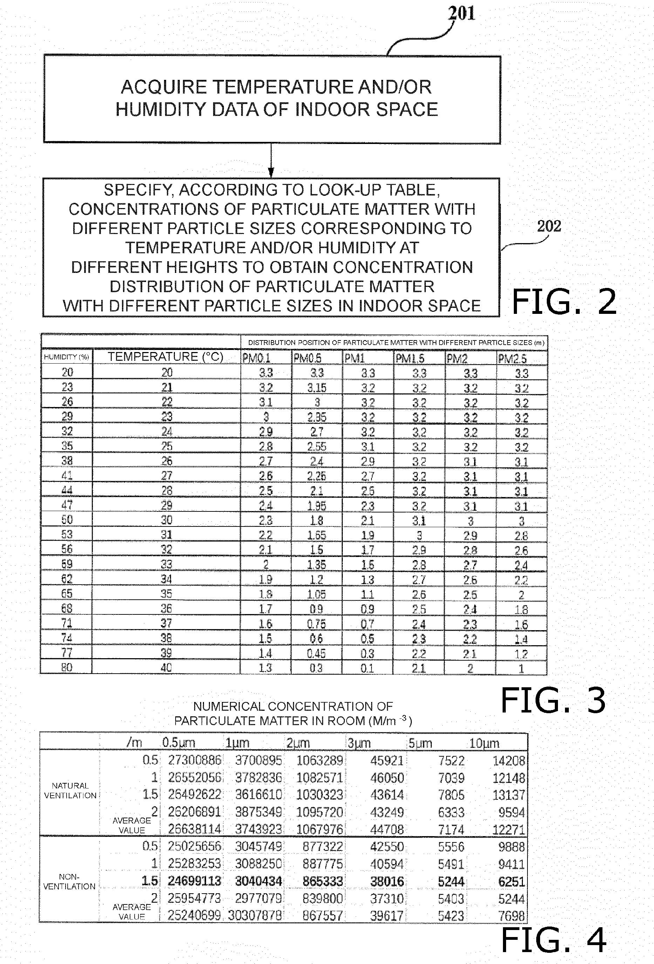

Fig. 2 is a flowchart of a method for implementing step 101 in Embodiment 1 of the present invention. As shown in Fig. 2, the method includes the following steps.

Step 201: acquiring temperature and/or humidity data of the indoor space, and

Step 202: specifying, according to a look-up table, concentrations of the particulate matter with different particle sizes corresponding to the temperature and/or humidity at different heights to obtain the concentration distribution of particulate matter with different particle sizes in the indoor space.

Thus, the concentration distribution of particulate matter with different particle sizes in the indoor space can be easily and quickly acquired by a table reference method.

In the embodiment of the present invention, the temperature and/or humidity data of the indoor space may be obtained by a temperature sensor and/or a humidity sensor in the room. The sensor may be a plurality of sensors at different positions in the room or may be a sensor movable in the room.

In the embodiment of the present invention, for example, the look-up table is a preestablished table stored in a database.

For example, a test may be performed in advance under different temperature and/or humidity conditions to obtain the concentrations of the particulate matter with different particle sizes at different heights, record these data, and create a look-up table.

Fig. 3 is an exemplary diagram of the look-up table according to Embodiment 1 of the present invention. As shown in Fig. 3, as the temperature and humidity increase, the distribution position of the particulate matter gradually lowers.

In step 202, the database is accessed, and the look-up table is acquired and matched in the database, so as to specify the concentrations of the particulate matter with various particle sizes corresponding to the temperature and/or humidity at different heights.

For example, when the height is low in the look-up table, the concentration of the particulate matter with large particle size corresponding to the humidity increases as the humidity becomes high, and the concentration of the particulate matter with small particle size corresponding to the humidity decreases as the humidity becomes low.

Thus, for example, when the humidity becomes high, the particulate matter with large particle size sinks, the directivity of purification is further improved in the distribution specified by the table reference method, and the purification effect is further improved.

Fig. 4 is a diagram showing a relationship between the number and concentration distribution of particulate matter in the room and ventilation and natural wind in Embodiment 1 of the present invention. As shown in Fig. 4, even when the temperature and humidity are constant, the distribution of the particulate matter is different between the natural ventilation state and the non-ventilation state. In the embodiment of the present invention, it is possible to control the purification equipment on this point.

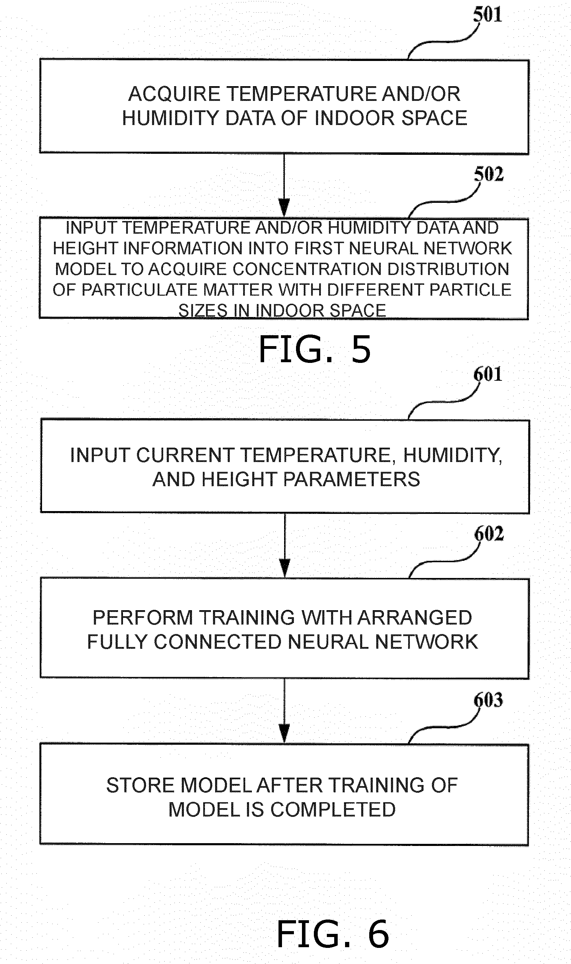

Fig. 5 is a flowchart of another method for implementing step 101 in Embodiment 1 of the present invention. As shown in Fig. 5, the method includes the following steps.

Step 501: acquiring temperature and/or humidity data of the indoor space, and

Step 502: inputting the temperature and/or humidity data and height information into a first neural network model to obtain a concentration distribution of particulate matter with different particle sizes in the indoor space.

Thus, the concentration distribution of particulate matter with different particle sizes in the indoor space is specified by the first neural network model, so that the efficiency and the accuracy are improved.

Step 501 is the same as step 201. Here, the specific description of step 501 is omitted.

In step 502, the temperature and/or humidity data and the height information are input into the first neural network model to obtain the concentration distribution of particulate matter with different particle sizes in the indoor space. The height information is, for example, the height in the room and/or the height of the floor where the purification equipment is located.

Therefore, when the concentration distribution of particulate matter with different particle sizes in the indoor space is specified, the height factors such as different heights in the room and floor height are considered, and different control strategies are generated correspondingly, so that the purification effect is further improved.

In the embodiment of the present invention, the first neural network model is a pre-trained model.

A training method of the first neural network model is exemplarily described below.

Fig. 6 is a flowchart of a method for training the first neural network model according to Embodiment 1 of the present invention. As shown in Fig. 6, the method includes the following steps.

Step 601: inputting current temperature, humidity, and height parameters,

Step 602: performing training with an arranged fully connected neural network, and Step 603: storing, after the training of the model is completed, the model.

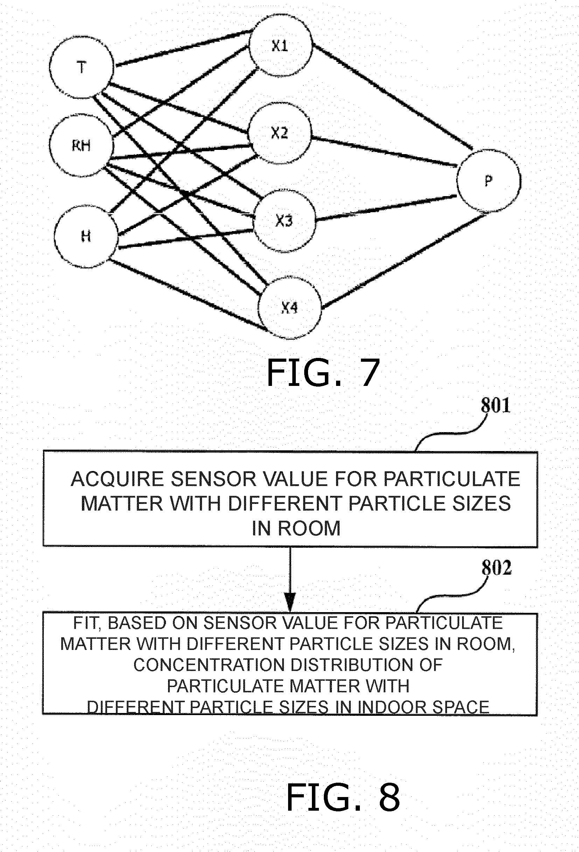

Fig. 7 is a schematic diagram showing a time when training the first neural network according to Embodiment 1 of the present invention. As shown in Fig. 7, the first neural network is a fully connected neural network, where the input T indicates the temperature, RH indicates the relative humidity, H indicates the height, and P indicates the concentration of the particulate matter. That is, the temperature, humidity, and at least one height parameter are input, and the concentration values of the particulate matter with different particle sizes predicted through a fully connected network are output.

After the design of the first neural network model is completed, it is necessary to determine the optimum value of the model by training the arrangement. That is, the goodness or badness of the model is evaluated by a loss function, and the mean square error is used as a standard for evaluating the goodness or badness of the model. For example, the loss function is expressed by the following equation (1).

$$\mathrm{Loss} = \left(p_{predicted} - p_{true}\right)^2 \qquad (1)$$

Here, Loss represents the loss value, $p_{predicted}$ represents the concentration value of the particulate matter output from the first neural network, and $p_{true}$ represents the true value of the concentration of the particulate matter.

The correction slope value, which is the corresponding slope value, is obtained simply by taking the inverse derivative, and the corresponding slope value becomes more accurate by minimizing Loss. Therefore, when the model is used in the positive direction, the accuracy is further improved. After the training is completed, the model may be stored.

Fig. 8 is a flowchart of further another method for implementing step 101 in Embodiment 1 of the present invention. As shown in Fig. 8, the method includes the following steps.

Step 801: acquiring a sensor value for particulate matter with different particle sizes in the room, and

Step 802: fitting, based on the sensor value for the particulate matter with different particle sizes in the room, the concentration distribution of particulate matter with different particle sizes in the indoor space.

Thus, the actual detection data from the particulate matter sensor is used to fit the concentration distribution of particulate matter with different particle sizes in the indoor space, thereby resulting in further improved accuracy.

In the embodiment of the present invention, for example, a plurality of sensors for detecting particulate matter with different particle sizes in the room are used, and further for example, the plurality of sensors are disposed at different heights in the room.

For example, a plurality of PM2.5 sensors and/or a plurality of PM10 sensors are provided at different heights in the room.

Also, a plurality of sensors for other different particle sizes, such as sensors for PM0.5, PM1, PM2, PM3, PM4 and PM5 may be included.

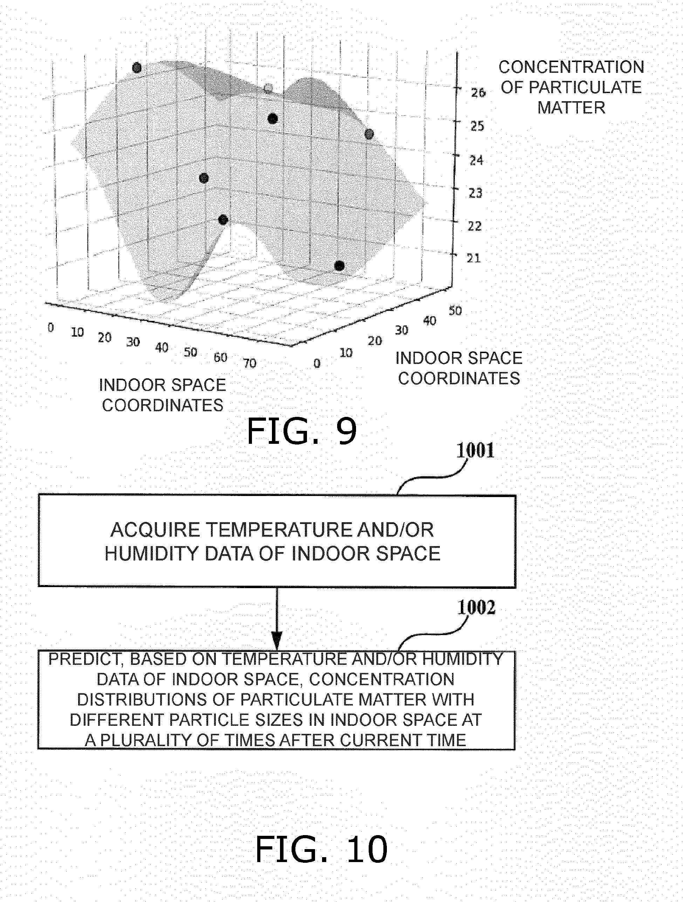

Fig. 9 is a schematic diagram of fitting the concentration distribution of the particulate matter in the room in Embodiment 1 of the present invention. As shown in Fig. 9, with respect to the particulate matters having a certain particle size, a 3D distribution of the concentration of the particulate matter in the room is fitted based on the concentration values of the particulate matter at a plurality of positions detected by the sensor. Similar fitting measures may also be taken for particulate matter having other particle sizes.

Details about specifying the current concentration distribution of particulate matter with different particle sizes in the indoor space in step 101 has been described above. It should be noted that, in the embodiment of the present invention, the concentration distribution of particulate matter with different particle sizes in the indoor space in the future may be predicted.

Fig. 10 is a flowchart of further another method for implementing step 101 in Embodiment 1 of the present invention. As shown in Fig. 10, the method includes the following steps.

Step 1001: acquiring temperature and/or humidity data of the indoor space, and

Step 1002: predicting, based on the temperature and/or humidity data of the indoor space, concentration distributions of particulate matter with different particle sizes in the indoor space at a plurality of times after the current time.

Correspondingly, in step 102, the control of the at least one equipment parameter is adjusted in real time according to the concentration distributions of particulate matter with different particle sizes in the indoor space at the plurality of times.

Therefore, the control of the air purifier may be adjusted in real time according to the predicted concentration distribution of particulate matter with different particle sizes in the indoor space in the future, thereby further improving the purification efficiency and the purification effect.

In the embodiment of the present invention, the prediction may be performed by a neural network or a simulation model.

For example, the temperature and/or humidity data and the height information are input into a second neural network model to obtain the concentration distributions of particulate matter with different particle sizes in the indoor space at a plurality of times after the current time.

Further, for example, the temperature and/or humidity data and the height information are input into the simulation model to obtain the concentration distributions of particulate matter with different particle sizes in the indoor space at a plurality of times after the current time.

In the embodiment of the present invention, the concentration distributions of particulate matter with different particle sizes in the indoor space at a plurality of times after the current time can be predicted not only according to the temperature and/or humidity data, but also according to environmental parameters of the indoor space.

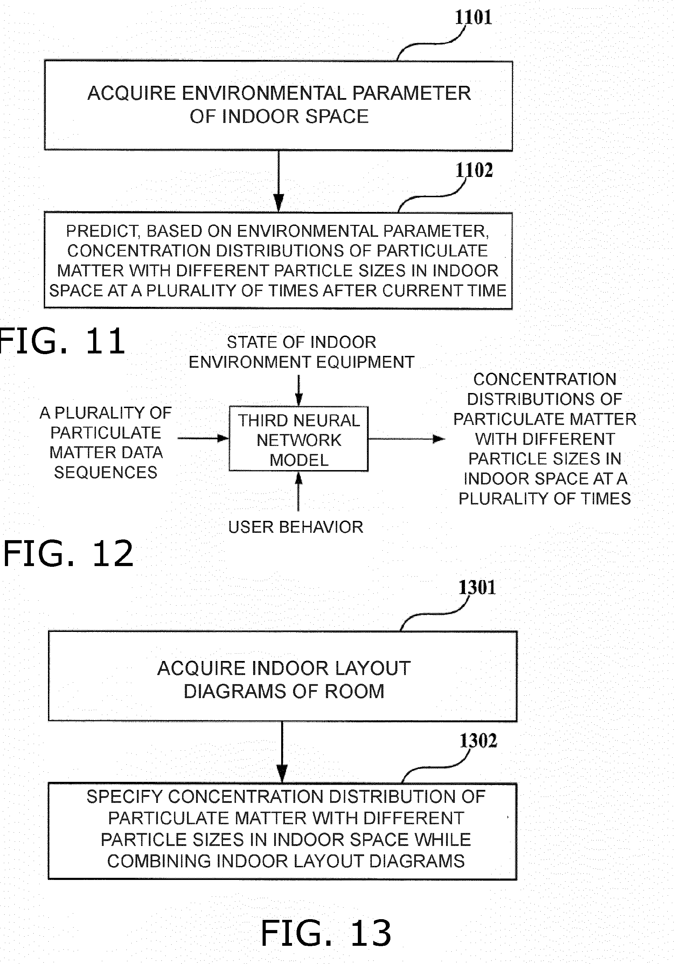

Fig. 11 is a flowchart of further another method for implementing step 101 in Embodiment 1 of the present invention. As shown in Fig. 11, the method includes the following steps.

Step 1101: acquiring an environmental parameter of the indoor space, and

Step 1102: predicting, based on the environmental parameter, concentration distributions of particulate matter with different particle sizes in the indoor space at a plurality of times after the current time.

In the embodiment of the present invention, indoor layout diagrams of the room may be acquired. Thus, the pollutant concentration distributions at a plurality of times after the current time can be predicted on the basis of the environmental parameter and the indoor layout diagrams.

Therefore, purification efficiency and purification effect can be further improved by combining the indoor layout diagrams of the room and predicting the pollutant concentration distribution.

For example, the indoor layout diagram may include at least one of the following elements: floor plan, furniture arrangement, orientation, and geographic location.

For example, the indoor layout diagram may be obtained based on a building information model and/or an indoor image photographed by a camera.

In step 1101, an environmental parameter of the indoor space is acquired.

In the embodiment of the present invention, for example, the environmental parameter may include at least one of temperature, humidity, concentration of particulate matter with different particle sizes, VOC concentration, formaldehyde concentration, odor concentration, and carbon dioxide concentration.

In the embodiment of the present invention, the environmental parameter may be obtained by a plurality of sensors disposed at different positions in the room or at least one sensor movable in the room.

For example, the environmental parameter includes at least one environmental parameter sequence of environmental parameters at a plurality of consecutive times at least one position point in the room.

Accordingly, in step 1102, the at least one environmental parameter sequence may be input into a third neural network model or a simulation model to output pollutant concentration distributions at a plurality of times after the current time.

In the embodiment of the present invention, the environmental parameter may include a plurality of environmental parameters at different heights in the room. Thus, the prediction accuracy can be further improved, and the purification efficiency and effect can be further improved.

In the embodiment of the present invention, when predicting the pollutant concentration distribution, the larger the number of the position points which are the sources of dependent environmental parameters is, the higher the prediction accuracy becomes.

For example, the environmental parameter includes four environmental parameter sequences of environmental parameters at eight consecutive times at four position points in the room, and in step 1102, the four environmental parameter sequences are input into the third neural network model or the simulation model as four channels to output the pollutant concentration distributions at a plurality of times after the current time.

Therefore, the detection of the environmental parameters distributed in the room can be almost completely covered by the four position points; and since the indoor space can be uniformly divided into four parts by the four position points, each of the four parts has one reference data, the accuracy is ensured and the cost is reduced.

For example, the third neural network model is a deep neural network including a Long short-term memory (LSTM) structure or a Gated Recurrent Unit (GRU) structure.

Further, for example, the simulation model is a computational fluid dynamics (CFD) simulation model. Further, when the neural network predicts the concentration distribution of particulate matter with different particle sizes in the indoor space in the future, it may perform the prediction by combining the indoor environment equipment with the user behavior based on the data from the particulate matter sensor.

For example, the at least one environmental parameter sequence, the state of the indoor environment equipment, and/or the user behavior are input into the third neural network model to obtain the concentration distributions of particulate matter with different particle sizes in the indoor space at a plurality of times after the current time.

For example, the at least one environmental parameter sequence includes a plurality of particulate matter data sequences at different positions in the room.

In the embodiment of the present invention, the third neural network model may be a trained deep neural network including a Long short-term memory (LSTM) structure or a Gated Recurrent Unit (GRU) structure.

In the embodiment of the present invention, examples of the indoor environment equipment include an air conditioner, a humidifier, a cleaning robot, and a fresh air device, and examples of the user behavior include smoking, opening a window, and cooking rice.

Fig. 12 is a schematic diagram of predicting a concentration distribution in Embodiment 1 of the present invention. As shown in Fig. 12, a plurality of particulate matter data sequences at different positions in the room, the state of the indoor environment equipment and the user behavior are input into the third neural network model to obtain concentration distributions of particulate matter with different particle sizes in the indoor space at a plurality of times after the current time.

Thus, the adjustment precision of the equipment parameters of the purifier can be further improved, and the purification efficiency and the purification effect are also further improved.

In the embodiment of the present invention, the simulation model is, for example, a computational fluid dynamics (CFD) simulation model.

In the embodiment of the present invention, the concentration distribution of the particulate matter may also be specified by combining the indoor layout diagram of the room.

Fig. 13 is a flowchart of further another method for implementing step 101 in Embodiment 1 of the present invention. As shown in Fig. 13, the method includes the following steps.

Step 1301: acquiring indoor layout diagrams of the room, and

Step 1302: specifying the concentration distribution of particulate matter with different particle sizes in the indoor space while combining the indoor layout diagrams.

Thus, the purification efficiency and the purification effect can be further improved by combining the indoor layout diagrams of the room and predicting the concentration distribution of the particulate matter.

For example, when there are a lot of suspended particles behind a sofa or a television, the purification effect can be optimized in the room by performing a targeted control and purification.

In the embodiment of the present invention, the indoor layout diagram may be acquired according to a BIM model and/or an indoor image photographed by a camera. For example, the indoor layout diagram may include elements such as floor plan, furniture arrangement, orientation, and geographic location.

In the embodiment of the present invention, in addition to controlling the purification equipment according to the concentration distribution of the particulate matter in the pollutants, the purification equipment may also be controlled according to the concentration distribution of other pollutants in the indoor space.

As shown in Fig. 1, the method may further include the following steps.

Step 103: specifying concentration distributions of pollutants other than the particulate matter in the indoor space, and

Step 104: controlling, according to the concentration distributions of the other pollutants in the indoor space, at least one equipment parameter of the purification equipment.

In Embodiment 1 of the present invention, steps 103 to 104 and steps 101 to 103 may be performed in sequence or in parallel. In addition, step 102 and step 104 may be executed in combination. That is, at least one equipment parameter of the purification equipment may be controlled according to the concentration distribution of particulate matter with different particle sizes in the indoor space and the concentration distributions of the other pollutants in the indoor space.

For example, the other pollutants may include pollutants such as odor, formaldehyde, VOC, and dust.

Thus, not only the purification equipment can be controlled according to the concentration distribution of the particulate matter, but also the purification equipment can be controlled according to the concentration distributions of other pollutants in the indoor space. Therefore, the purification equipment can purify the air thoroughly and efficiently, and equipment performance and user experience are further improved.

In step 102 or step 104, at least one equipment parameter of the purification equipment is controlled.

The equipment parameter may be various parameters related to an air purification process. For example, the equipment parameter may be at least one of opening/closing number, opening/closing range, and opening/closing angle of a suction port, or at least one of opening/closing number, opening/closing range, and opening/closing angle of a blow-out port, or magnitude of wind power, or operating mode.

For example, in step 102, the suction port and the blow-out port of the purification equipment are controlled according to the concentration distribution of particulate matter with different particle sizes in the indoor space.

Thus, the purification efficiency and the purification effect can be further improved by controlling the suction port and the blow-out port in both directions according to the concentration distribution of particulate matter with different particle sizes in the indoor space.

In the embodiment of the present invention, the purification equipment may be provided with an environment sensor for detecting obstacles in the environment.

As shown in Fig. 1, the method may further include the following steps.

Step 105: controlling, based on the detection result of the obstacles around the purification equipment, at least one of the opening/closing numbers, opening/closing ranges, and opening/closing angles of the suction port and the blow-out port.

Thus, when the obstacles around the purification equipment are detected, the parameters of the suction port and the blow-out port can be controlled in time, so that purification effect can be ensured, and energy-saving performance of the equipment can be improved.

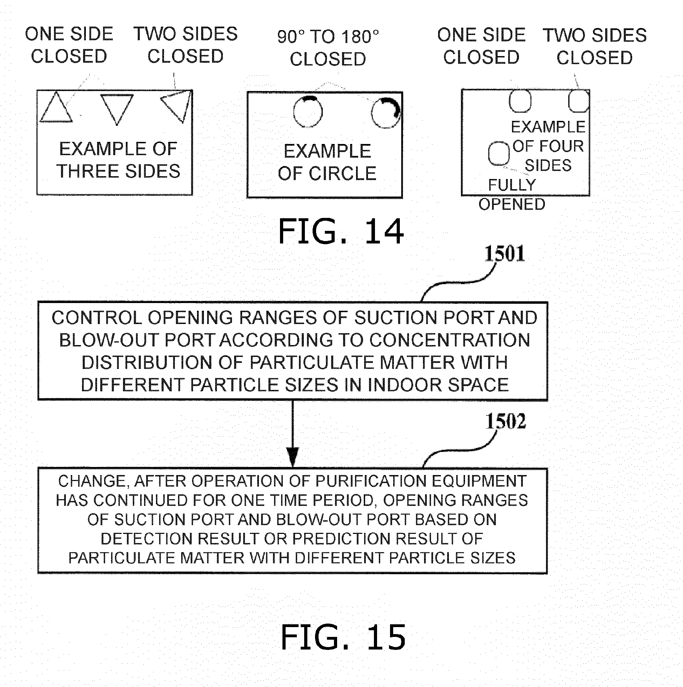

Fig. 14 is a diagram showing several examples of controlling the suction port and the blow-out port according to the obstacles in Embodiment 1 of the present invention. As shown in Fig. 14, when the cross section of the air purifier has a three-side structure, the suction port and the blow-out port on one side are closed or the suction port and the blow-out port on two sides are closed according to the detection result of the surrounding wall surfaces. When the cross section of the air purifier is a circular structure, a part of the suction port and the blow-out port in an angular range of 90 to 180° is closed according to the detection result of the surrounding wall surfaces. When the cross section of the air purifier has a four-side structure the suction port and the blow-out port on one side are closed, or the suction port and the blow-out port on two sides are closed, or the suction port and the blow-out port are not closed (i.e., the suction port and the blow-out port are fully opened) according to the detection result of the surrounding wall surfaces.

The controlling of the suction port and the blow-out port of the purification equipment according to the concentration distribution of particulate matter with different particle sizes in the indoor space will be described below in detail.

Fig. 15 is a flowchart of a method for implementing step 102 in Embodiment 1 of the present invention. As shown in Fig. 15, the method includes the following steps.

Step 1501: controlling the opening ranges of the suction port and the blow-out port according to the concentration distribution of particulate matter with different particle sizes in the indoor space, and

Step 1502: changing, after the operation of the purification equipment has continued for one time period, the opening ranges of the suction port and the blow-out port based on the detection result or prediction result of the particulate matter with different particle sizes.

Thus, by controlling, after the operation based on the opening ranges of the concentration distribution of the particulate matter has continued for one time period, the suction port and the blow-out port by changing the opening ranges of the suction port and the blow-out port according to the detection result or prediction result, the optimization of the purification efficiency and the purification effect can always be ensured, so that the performance of the equipment is further improved.

For example, when the concentration of the particulate matter with large particle size in a lower height region in the room is high, the opening ranges of the suction port and the blow-out port are controlled to be within the lower height region, and the wind power is increased; after the operation of the purification equipment has continued for one time period, the opening ranges of the suction port and the blow-out port in height are gradually increased based on the detection result or prediction result of the particulate matter.

For example, when the humidity is high, most of the particulate matter with large particle size is deposited in the lower part, thus the opening ranges of the suction port and the blow-out port are controlled to be within the lower height region, and the wind power is increased and, after the internal circulation operation in the lower part has continued for one time period, the opening ranges of the suction port and the blow-out port are gradually increased from the bottom to the top based on the detection result or prediction result. Thus, high purification efficiency and good purification effect are obtained.

Further, for example, when the concentration of the particulate matter with large particle size is small in a lower height region in the room, the opening ranges of the suction port and the blow-out port are controlled to the maximum ranges in height; and, after the operation of the purification equipment has continued for one time period, the opening ranges of the suction port and the blow-out port in height are gradually reduced based on the detection result or prediction result of the particulate matter.

For example, when the humidity is low, the particulate matter with large particle size does not sink in the room, the opening ranges of the suction port and the blow-out port are controlled to the maximum ranges in height; and, after the operation in the room has continued for one time period, the opening ranges of the suction port and the blow-out port in height are gradually reduced to purify the particulate matter in order, thereby obtaining high purification efficiency and good purification effect.

In the embodiment of the present invention, the method may further include the following step:

starting, when the noise of the purification equipment is greater than a preset threshold, a noise elimination module.

For example, when the noise elimination module is started, the noise elimination module may broadcast music or may broadcast a sound, such as white noise, prompting the user to make a sleep or take a break.

Thus, when the noise becomes large due to the purification process by the purification equipment, the atmosphere can be softened by broadcasting music or sound, and the user experience is improved.

In addition, the embodiment of the present invention further provides a control method for purification equipment, including the following steps.

Step S 1: acquiring current humidity and temperature data,

Step S2: the storage module performs investigation based on a look-up table of the contents of the particulate matter with different particle sizes at the temperature and humidity corresponding to different heights,

Step S3: determining the current distribution state of the particulate matter based on the investigation result of the look-up table,

Step S4: outputting, according to the current distribution state of the particulate matter, the areas, numbers, and wind power control ranges of the corresponding suction port and blow-out port,

Step S5: controlling, according to the areas, numbers, and wind power control ranges of the suction port and the blow-out port, the operation state of the purification equipment,

Step S6: outputting, after the internal circulation operation in the bottom portion of the indoor space has continued for one time period, a control command for sequentially increasing or decreasing the area of the blow-out port according to a distribution state of the particulate matter in a simulation performed at a different time, and

Step S7: controlling the area of the blow-out port of purification equipment so as to be sequentially increased or decreased by sequentially increasing or decreasing the area of the blow-out port.

As can be known from the above embodiment that, for example, the purification equipment is controlled according to the concentration distribution of particulate matter with different particle sizes in the indoor space corresponding to different temperature and humidity, so that targeted control of the particulate matter with different particle sizes performed, purification efficiency and speed can be increased, and good purification effect can be achieved quickly and highly efficiently.

Further, since pollutant concentration distributions at a plurality of times after the current time are predicted based on collected current environmental parameters, and since the purification equipment is controlled according to the predicted pollutant concentration distributions, the state of the pollutant concentration distributions in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

<Embodiment 2>

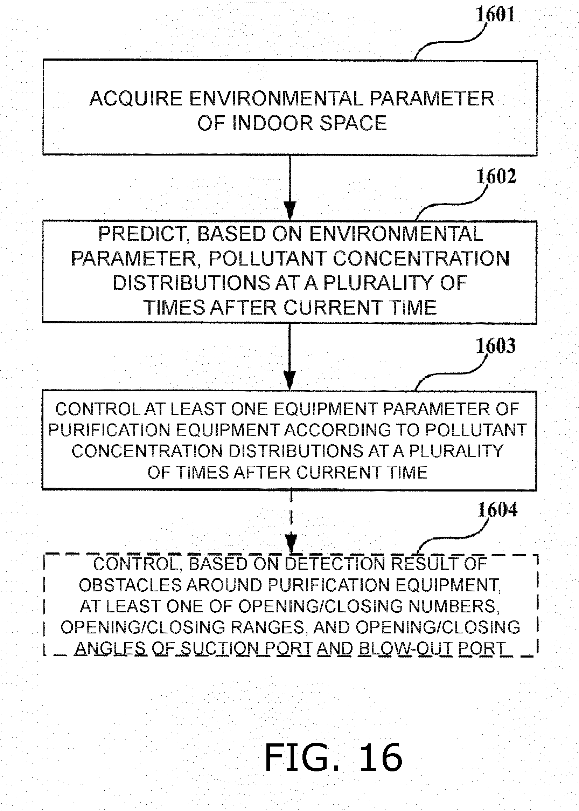

Embodiment 2 of the present invention provides a control method for purification equipment. Fig. 16 is a flowchart of a control method for purification equipment according to Embodiment 2 of the present invention. As shown in Fig. 16, the method includes the following steps.

Step 1601: acquiring an environmental parameter of the indoor space,

Step 1602: predicting, based on the environmental parameter, pollutant concentration distributions at a plurality of times after the current time, and

Step 1603: controlling at least one equipment parameter of the purification equipment according to the pollutant concentration distributions at a plurality of times after the current time.

Thus, since the pollutant concentration distributions at a plurality of times after the current time is predicted based on the collected current environmental parameter, and since the purification equipment is controlled according to the predicted pollutant concentration distributions, the state of the pollutant concentration distribution in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

In the embodiment of the present invention, the purification equipment may be various types of purification equipment. For example, the purification equipment may be an air purifier, a fresh air device, or an air conditioner with an air purification function.

In the embodiments of the present invention, the purification equipment may be purification equipment for household use, purification equipment for commercial use, or purification equipment for public use.

For example, the purification equipment may be used in a residential environment, in a commercial environment such as an office, an office building, a shopping mall or the like, or in a public environment such as a school or the like.

In the embodiment of the present invention, the control method for purification equipment may be executed by the purification equipment. For example, the control method may be executed by a controller of the purification equipment.

In the embodiment of the present invention, indoor layout diagrams of the room may be acquired. Thus, the pollutant concentration distributions at a plurality of times after the current time can be predicted on the basis of the environmental parameter and the indoor layout diagrams.

Therefore, purification efficiency and purification effect can be further improved by combining the indoor layout diagrams of the room and predicting the pollutant concentration distribution.

For example, the indoor layout diagram may include at least one of the following elements: floor plan, furniture arrangement, orientation, and geographic location.

For example, the indoor layout diagram may be obtained based on a building information model and/or an indoor image photographed by a camera.

In step 1601, an environmental parameter of the indoor space is acquired.

In the embodiment of the present invention, for example, the environmental parameter may include at least one of temperature, humidity, concentration of particulate matter with different particle sizes, VOC concentration, formaldehyde concentration, odor concentration, and carbon dioxide concentration.

In the embodiment of the present invention, for example, the pollutant concentration distribution includes at least one of the following: a concentration distribution of particulate matter with different particle sizes in the indoor space, a concentration distribution of VOC in the indoor space, a concentration distribution of formaldehyde in the indoor space, a concentration distribution of odor in the indoor space, and a concentration distribution of carbon dioxide in the indoor space.

In the embodiment of the present invention, the environmental parameter may be obtained by a plurality of sensors disposed at different positions in the room or at least one sensor movable in the room.

For example, the environmental parameter includes at least one environmental parameter sequence of environmental parameters at a plurality of consecutive times at least one position point in the room.

Correspondingly, in step 1602, the at least one environmental parameter sequence may be input into a simulation model, and the pollutant concentration distributions at a plurality of times after the current time may be output.

In the embodiment of the present invention, the environmental parameter may include a plurality of environmental parameters at different heights in the room. Thus, the prediction accuracy can be further improved, and the purification efficiency and effect can be further improved.

In the embodiment of the present invention, when predicting the pollutant concentration distribution, the larger the number of the position points which are the sources of dependent environmental parameters is, the higher the prediction accuracy becomes.

For example, the environmental parameter includes four environmental parameter sequences of the environmental parameters at eight consecutive times at four position points in the room, and in step 102, the four environmental parameter sequences are input into the simulation model as four channels to output the pollutant concentration distributions at a plurality of times after the current time.

Therefore, the detection of the environmental parameters distributed in the room can be almost completely covered by the four position points; and since the indoor space can be uniformly divided into four parts by the four position points, each of the four parts has one reference data, the accuracy is ensured and the cost is reduced.

In the embodiment of the present invention, the prediction model may be a deep neural network model or a simulation model.

For example, the simulation model is a deep neural network including a Long Short-Term Memory (LSTM) structure or a Gated Recurrent Unit (GRU) structure.

Further, for example, the simulation model is a computational fluid dynamics (CFD) simulation model.

A training process of the deep neural network as a prediction model will be exemplarily described below.

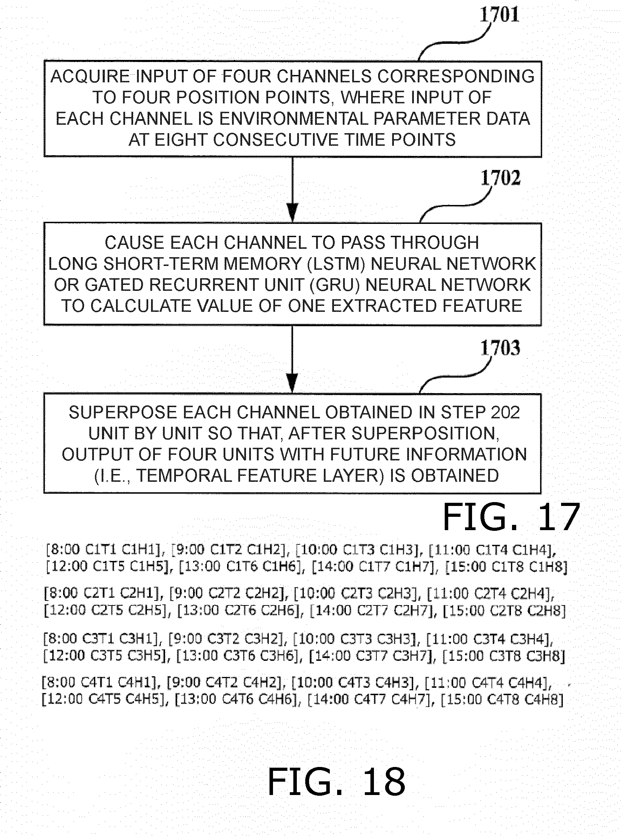

Fig. 17 is a flowchart of a method of training the prediction model according to Embodiment 2 of the present invention. As shown in Fig. 17, the method includes the following steps.

Step 1701: acquiring input of four channels corresponding to the four position points, where input of each channel is environmental parameter data at eight consecutive time points,

Step 1702: causing each channel to pass through a Long Short-Term Memory (LSTM) neural network or a Gated Recurrent Unit (GRU) neural network to calculate the value of one extracted feature, and

Step 1703: superposing each channel obtained in step 202 unit by unit so that, after the superposition, output of the four units with future information (i.e., a temporal feature layer) is obtained.

In the embodiment of the present invention, the output as the temporal feature layer may be used to specify control commands of the purification equipment in the future.

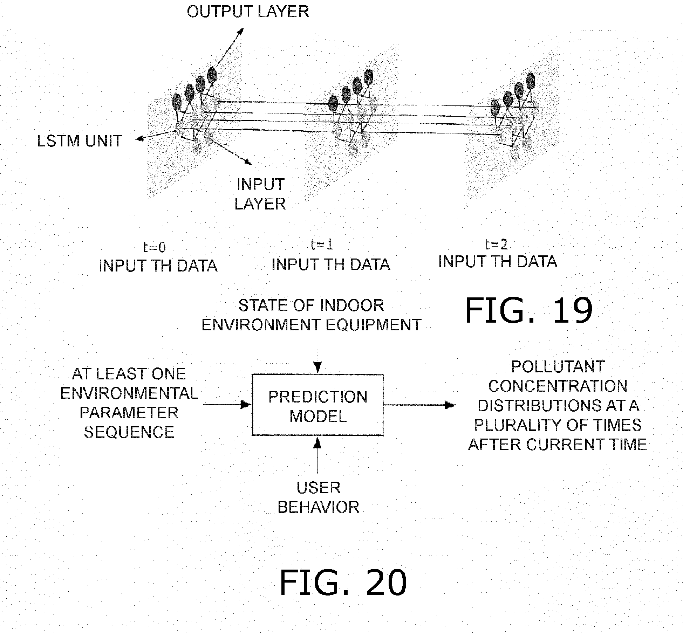

Fig. 18 is a schematic diagram showing input data of the four channels obtained in step 1701 according to Embodiment 2 of the present invention. Fig. 19 is a schematic diagram of each channel passing through the Long short-term memory (LSTM) neural network in step 1702 in Embodiment 2 of the present invention.

As shown in Fig. 18, the input of one channel is particulate matter data with different particle sizes at eight consecutive time points. In this example, the eight consecutive time points are spaced apart by a time interval of one hour, but other time intervals may be used. The embodiments of the present invention are not limited thereto.

As shown in Fig. 19, each time point of each channel is sequentially put into the LSTM or GRU neural network layer. For example, data at a time 8:00 is input to a network layer of T = 0 and data at a time 9:00 is input to a network layer of T = 1, where T = 0 and T = 1 merely indicate different times at a same network layer. Thus, the neural network is able to learn the relationship between the different sequences and has the ability to predict data in the future.

In the embodiment of the present invention, the prediction model becomes more optimized every time it is repeated, the predicted pollutant concentration distribution becomes more accurate, and the corresponding control command becomes more accurate. The trained prediction model may be stored and directly used in subsequent steps, so as to directly obtain accurate concentration distribution of the pollution source at a plurality of times in the future. For example, the sizes of the suction port and the blow-out port may be determined in advance according to the pollutant concentration distributions at a plurality of times in the future, so as to improve the purification efficiency; and energy-saving performance is improved by performing adjustment and control according to the actual situation until the pollutants are thoroughly purified without repeatedly detecting the pollutant concentration distribution.

In the embodiment of the present invention, the indoor environment equipment and the user behavior may be combined for prediction.

For example, in step 1602, the at least one environmental parameter sequence, the state of the indoor environment equipment, and/or the user behavior are input into the prediction model, and the pollutant concentration distributions at a plurality of times after the current time are output.

Thus, the adjustment accuracy of the purification equipment can be further improved, and the purification efficiency and the purification effect are further improved.

In the embodiment of the present invention, examples of the indoor environment equipment include an air conditioner, a humidifier, a cleaning robot, and a fresh air device, and examples of the user behavior include smoking, opening a window, and cooking rice.

Fig. 20 is a schematic diagram of predicting a concentration distribution according to Embodiment 2 of the present invention. As shown in Fig. 20, at least one environmental parameter sequence, a state of indoor environment equipment and a user behavior are input into a prediction model to obtain pollutant concentration distributions at a plurality of times after the current time.

In the embodiment of the present invention, the equipment parameter may be various parameters related to the air purification process. For example, the equipment parameter may be at least one of opening/closing number, opening/closing range, and opening/closing angle of a suction port, or at least one of opening/closing number, opening/closing range, and opening/closing angle of a blow-out port, or magnitude of wind power, or operating mode.

For example, in step 1602, the suction port and the blow-out port of the purification equipment are controlled according to the predicted pollutant concentration distribution.

Thus, the purification efficiency and the purification effect can be further improved by controlling the suction port and the blow-out port in both directions according to the predicted pollutant concentration distribution.

In the embodiment of the present invention, the number of pollutants at a plurality of times after the current time may be specified according to the predicted pollutant concentration distribution, and the purification equipment may be controlled according to the number of pollutants.

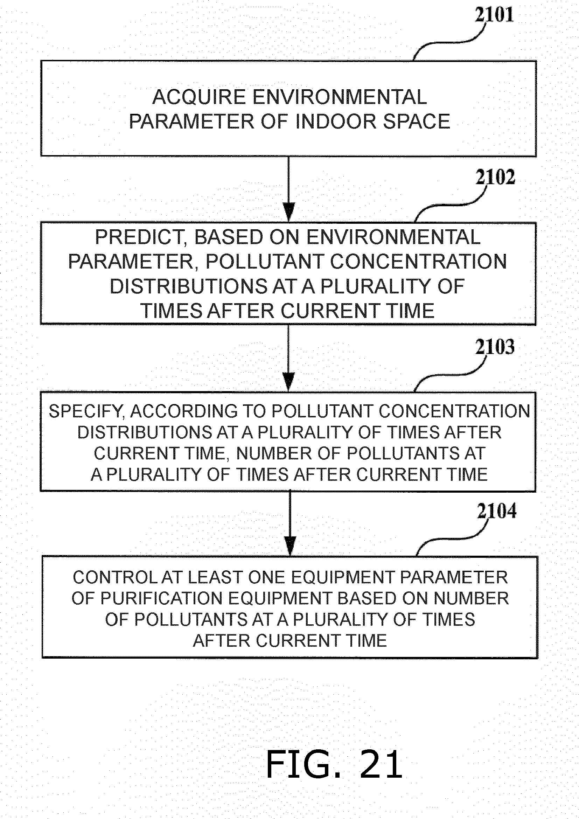

Fig. 21 is another flowchart of the control method for purification equipment according to Embodiment 2 of the present invention. As shown in Fig. 21, the control method includes the following steps.

Step 2101: acquiring an environmental parameter of the indoor space,

Step 2102: predicting, based on the environmental parameter, pollutant concentration distributions at a plurality of times after the current time,

Step 2103: specifying, according to the pollutant concentration distributions at a plurality of times after the current time, the number of pollutants at a plurality of times after the current time, and

Step 2104: controlling at least one equipment parameter of the purification equipment based on the number of pollutants at a plurality of times after the current time.

Thus, the number of pollutants specified according to the pollutant concentration distributions may be accurate and reflect the distribution characteristics. By controlling the purification equipment based on the number of pollutants, the purification efficiency and purification effect are further improved.

For example, it is possible to acquire the concentration distribution of the particulate matter with different particle sizes in the future and then calculate the number of the particulate matter with different particle sizes to further control the accuracy and number of the elevation of the suction port based on the calculated number. When the particulate matter with large particle size is present in the bottom portion of the entire indoor space, the number and height of the suction ports are increased to accelerate the suction of the particulate matter, thereby achieving rapid purification.

In embodiment of the present invention, the number of pollutants may be obtained, for example, by multiplying the concentration of the pollutants by the volume.

Further, the number of pollutants may be actually detected to create a look-up table, and the number of pollutants in the future may be acquired by a table reference method according to the predicted pollutant concentration distribution.

In the embodiment of the present invention, the purification equipment may be provided with an environment sensor for detecting obstacles in the environment.

As shown in Fig. 16, the method may further include the following steps.

Step 1604: controlling, based on the detection result of the obstacles around the purification equipment, at least one of the opening/closing numbers, opening/closing ranges, and opening/closing angles of the suction port and the blow-out port.

Thus, when the obstacles around the purification equipment are detected, the parameters of the suction port and the blow-out port can be controlled in time, so that purification effect can be ensured, and energy-saving performance of the equipment can be improved.

Similarly to the case of Fig. 14, as shown in Fig. 14, when the cross section of the air purifier has a three surface structure, the suction port and the blow-out port on one side are closed or the suction port and the blow-out port on two sides are closed according to the detection result for the surrounding wall surfaces. When the cross section of the air purifier is a circular structure, a part of the suction port and the blow-out port in an angular range of 90 to 180° is closed according to the detection result of the surrounding wall surfaces. When the cross section of the air purifier has a four-side structure the suction port and the blow-out port on one side are closed, or the suction port and the blow-out port on two sides are closed, or the suction port and the blow-out port are not closed (i.e., the suction port and the blow-out port are fully opened) according to the detection result of the surrounding wall surfaces.

In the embodiment of the present invention, the equipment parameter may be various parameters related to the air purification process. For example, the equipment parameter may be at least one of opening/closing number, opening/closing range, and opening/closing angle of a suction port, or at least one of opening/closing number, opening/closing range, and opening/closing angle of a blow-out port, or magnitude of wind power, or operating mode.

The details about controlling the suction port and the blow-out port of the purification equipment according to the predicted pollutant concentration distribution will be described below.

For example, in step 1603, if it is specified that the pollutant tends to increase or decrease according to the pollutant concentration distributions at a plurality of times after the current time, the opening/closing numbers, opening/closing ranges, or opening/closing angles of the suction port and the blow-out port are controlled to increase or decrease accordingly.

Further, for example, in step 2104, if it is specified that the pollutant tends to increase or decrease according to the number of pollutants at a plurality of times after the current time, the opening/closing numbers, opening/closing ranges, or opening/closing angles of the suction port and the blow-out port are controlled to increase or decrease accordingly.

Thus, after the prior judgment by the control command according to the pollutant concentration distribution or the number of pollutants at different times in the future, the control ranges of the area, the number and the wind power of the suction port and the blow-out port of the purification equipment can be generated accordingly, so as to optimize the purification effect. In addition, re-detection and re-installation can be avoided to further save energy.

In addition, in the embodiment of the present invention, multidirectional control may also be used instead of being limited to the bidirectional control for the suction port and the blow-out port.

In the embodiment of the present invention, in step 1603, at least one control strategy and the time required for the purification equipment to implement the control strategy may be specified.

When a plurality of control strategies is specified, the times required for the plurality of control strategies may be different. For example, the plurality of control strategies correspond to different suction port and blow-out port sizes and different air volumes.

For example, one control strategy may be selected, or a control strategy with the shortest required time may be automatically selected, or selection may be performed by the user.

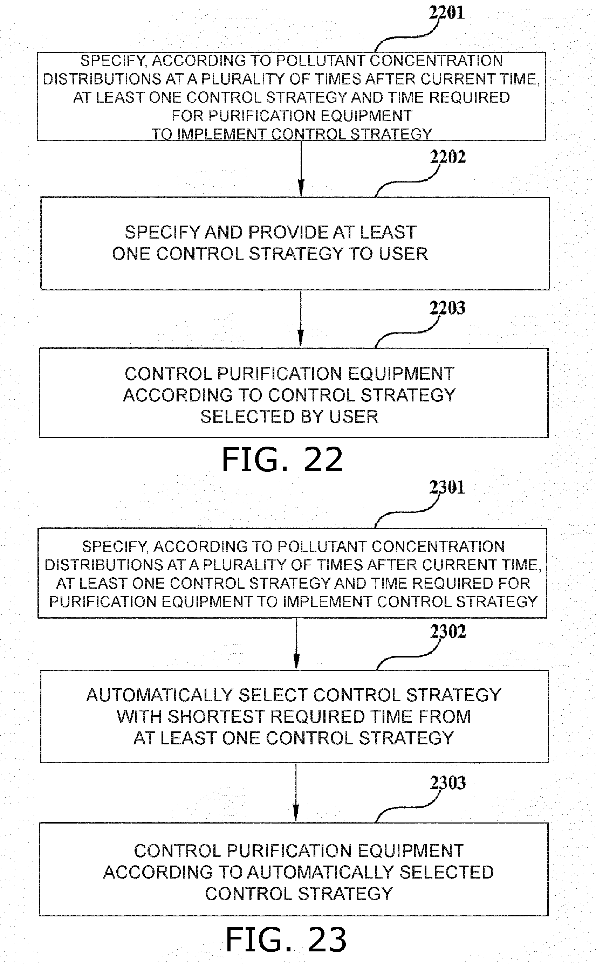

Fig. 22 is a flowchart of a method for implementing step 1603 in Embodiment 2 of the present invention. As shown in Fig. 22, the method includes the following steps.

Step 2201: specifying, according to the pollutant concentration distributions at a plurality of times after the current time, at least one control strategy and the time required for the purification equipment to implement the control strategy,

Step 2202: specifying and providing at least one control strategy to the user, and

Step 2203: controlling the purification equipment according to the control strategy selected by the user.

Thus, the user experience can be further improved.

Fig. 23 is a flowchart of another method for implementing step 1603 in Embodiment 2 of the present invention. As shown in Fig. 23, the method includes the following steps.

Step 2301: specifying, according to the pollutant concentration distributions at a plurality of times after the current time, at least one control strategy and the time required for the purification equipment to implement the control strategy,

Step 2302: automatically selecting a control strategy with the shortest required time from the at least one control strategy, and

Step 2303: controlling the purification equipment according to the automatically selected control strategy.

In the embodiment of the present invention, the method may further include the following step:

starting, when the noise of the purification equipment is greater than a preset threshold, a noise elimination module.

For example, when the noise elimination module is started, the noise elimination module may broadcast music or a sound to prompt the user to make a sleep or take a break.

Thus, when the noise becomes large due to the purification process by the purification equipment, the atmosphere can be softened by broadcasting music, and the user experience is improved.

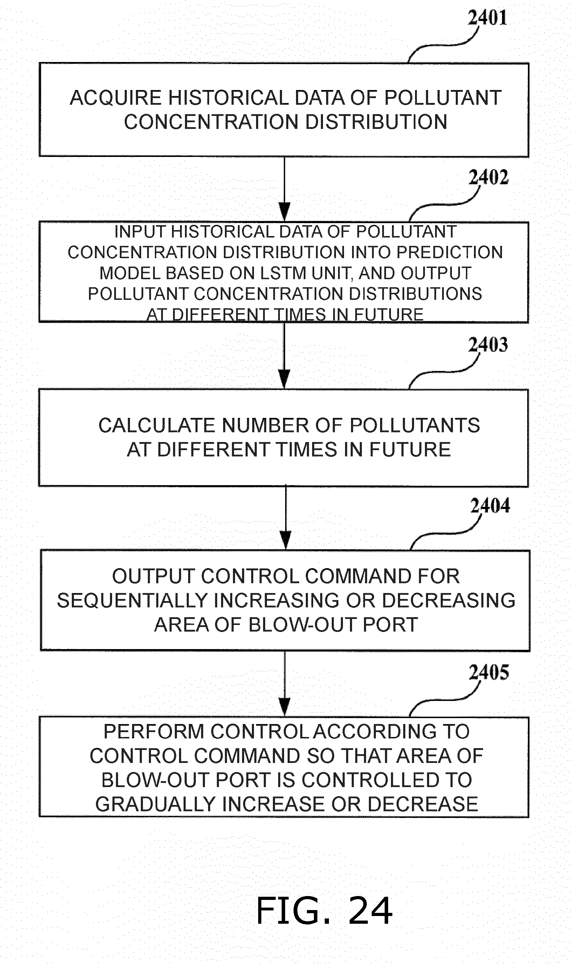

In addition, the embodiment of the present invention further discloses a control method for purification equipment. Fig. 24 is another flowchart of a control method for purification equipment according to Embodiment 2 of the present invention. As shown in Fig. 24, the control method includes the following steps.

Step 2401: acquiring historical data of the pollutant concentration distribution,

Step 2402: inputting the historical data of the pollutant concentration distribution into a prediction model based on the LSTM unit, and outputting the pollutant concentration distributions at different times in the future,

Step 2403: calculating the number of pollutants at different times in the future,

Step 2404: outputting a control command for sequentially increasing or decreasing the area of the blow-out port, and

Step 2405: performing a control according to the control command so that the area of the blow-out port is controlled to sequentially increase or decrease.

As can be known from the above embodiment, since the pollutant concentration distributions at a plurality of times after the current time are predicted based on the collected current environmental parameters, and since the purification equipment is controlled according to the predicted pollutant concentration distributions, the state of the pollutant concentration distributions in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

<Embodiment 3>

Embodiment 3 of the present invention provides a control device for purification equipment, corresponding to the control method for purification equipment as described in

Embodiment 1; with regard to the concrete implementation of the control device, the implementation of the method as described in Embodiment 1 may be referred to, and description of the identical or related contents will be omitted.

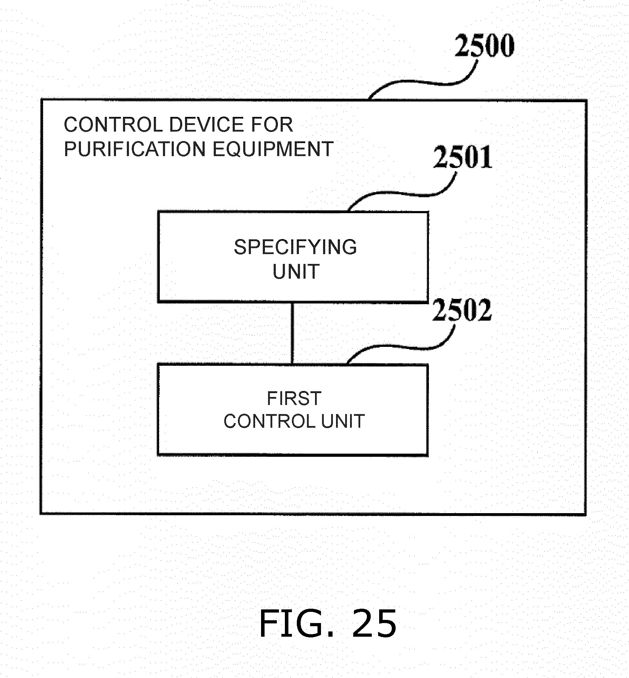

Fig. 25 is a schematic diagram of a control device for purification equipment according to Embodiment 3 of the present invention. As shown in Fig. 25, a control device 2500 for the purification equipment includes:

a specifying unit 2501 for specifying a concentration distribution of particulate matter with different particle sizes in the indoor space; and
a first control unit 2502 for controlling at least one equipment parameter of the purification equipment according to the concentration distribution of particulate matter with different particle sizes in the indoor space.

In the embodiments of the present invention, for implementation of functions of the above units, reference may be made to related steps in Embodiment 1. Description thereof is omitted here.

In the embodiment of the present invention, the control device 2500 for the purification equipment may be provided in the purification equipment, or may be provided as an independent device.

In addition to the control functions described in the embodiments of the present invention, the control device 2500 for the purification equipment may also include other control functions, such as correct/incorrect of a power switch, timing control, and the like.

As can be known from the above embodiment, since the purification equipment is controlled according to the concentration distribution of particulate matter with different particle sizes in the indoor space, targeted control of the particulate matter with different particle sizes can be performed, purification efficiency and speed can be increased, and good purification effect can be achieved quickly and highly efficiently.

<Embodiment 4>

Embodiment 4 of the present invention provides a control device for purification equipment, corresponding to the control method for purification equipment as described in Embodiment 2; with regard to the concrete implementation of the control device, the implementation of the method as described in Embodiment 2 may be referred to, and description of the identical or related contents will be omitted.

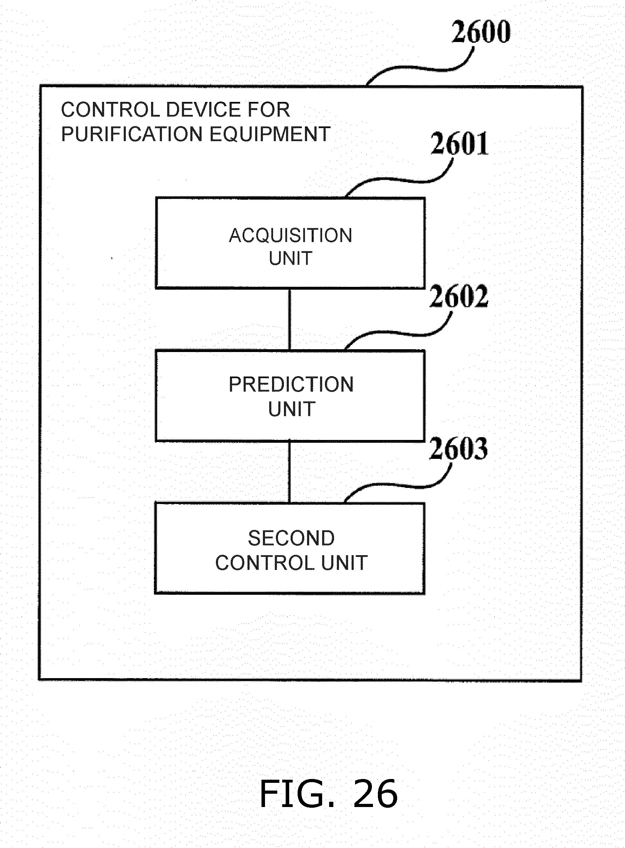

Fig. 26 is a schematic diagram of a control device for a purification equipment according to Embodiment 4 of the present invention. As shown in Fig. 26, a control device 2600 for the purification equipment includes:

an acquisition unit 2601 configured to acquire an environmental parameter of the indoor space;

a prediction unit 2602 configured to predict, based on the environmental parameter, pollutant concentration distributions at a plurality of times after the current time; and

a second control unit 2603 configured to control at least one equipment parameter of the purification equipment according to the pollutant concentration distributions at a plurality of times after the current time.

In the embodiments of the present invention, for implementation of functions of the above units, reference may be made to related steps in Embodiment 1. Description thereof is omitted here.

In the embodiment of the present invention, the control device 2600 for the purification equipment may be provided in the purification equipment, or may be provided as an independent device.

In addition to the control functions described in the embodiment of the present invention, the control device 2600 for the purification equipment may also include other control functions, such as correct/incorrect of a power switch, timing control, and the like.

As can be known from the above embodiment, since the pollutant concentration distributions at a plurality of times after the current time are predicted based on the collected current environmental parameters, and since the purification equipment is controlled according to the predicted pollutant concentration distributions, the state of the pollutant concentration distributions in the future can be acquired without performing continuous detection. The processing speed is fast, and the energy-saving performance of the equipment is improved. Further, by controlling the purification equipment in accordance with the concentration distribution in the future, the purification efficiency is increased and the purification effect is improved. Therefore, the air purification process can be performed efficiently, quickly in an energy-saving manner.

<Embodiment 5>

Embodiment 5 of the present invention provides purification equipment including the control device for purification equipment as described in Embodiment 3 or 4; with regard to the concrete implementation of the purification equipment, the implementation of the device as described in Embodiment 3 or 4 or the method as described in Embodiment 1 or 2 may be referred to, and description of the identical or related contents will be omitted.

In the embodiment of the present invention, for example, the control device for purification equipment according to Embodiment 3 or 4 is a controller provided in the purification equipment, or the control device is integrated in a controller of the purification equipment.

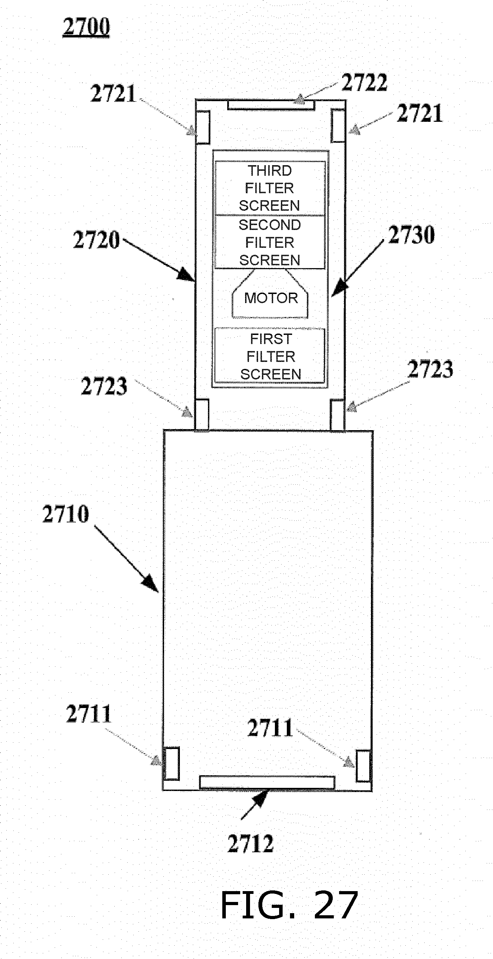

Fig. 27 is a structural diagram of purification equipment in Embodiment 5 of the present invention. As shown in Fig. 27, purification equipment 2700 includes:

a control device (not shown in Fig. 27);
an outer case 2710 having suction ports 2711 and 2712 provided in a lower end portion and a bottom portion of a peripheral side edge thereof; and
an inner case 2720 having blow-out ports 2721 and 2722 provided on a peripheral side edge and an upper side thereof.

The inner case 2710 is fitted into the outer case 2720 and is adjusted upward or downward by an up-down adjuster (not shown in Fig. 27).

The purification equipment 2700 further includes a filter body means 2730 provided in the inner case 2720; and

a fan (not shown in Fig. 27) provided in the inner case or the outer case.

The suction port is provided with first wind-guide plates, and the blow-out port is provided with second wind-guide plates.

The control device controls at least one of the suction port, the blow-out port, the up-down adjuster, the first wind-guide plates, and the second wind-guide plates according to a control command.

As shown in Fig. 27, a suction port 2723 is further provided in a bottom portion of the inner case 2720.

In the embodiment of the present invention, the first wind-guide plates are arranged in the inner case 2720, the first wind-guide plates are arranged on the peripheral side edge of the inner case and are perpendicular to the upper side edge of the inner case, and the first wind-guide plates are rotationally distributed.

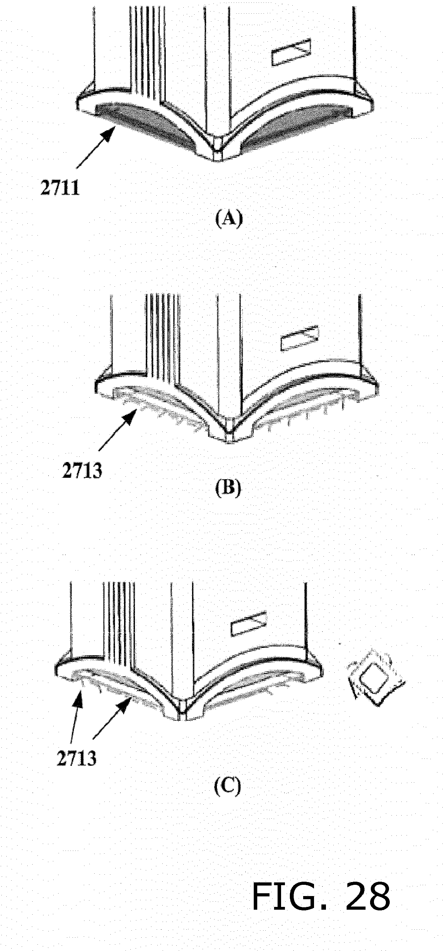

Fig. 28 is a schematic diagram of a plurality of states of the first wind-guide plates according to Embodiment 5 of the present invention. As shown in (A) of Fig. 28, when the suction port 2711 is closed, first wind-guide plates 2713 are closed. As shown in (B) of Fig. 28, when it is detected that there is an obstacle around the purification equipment, the first wind-guide plates 2713 on the four sides are opened in the same direction in a rotating manner. As shown in (C) of Fig. 28, when an obstacle is present around a part of the suction port 2711, the first wind-guide plates 2713 corresponding to the position where the obstacle is present are closed, and the remaining first wind-guide plates 2713 are opened in the same direction in a rotating manner.

Thus, the first wind-guide plates are arranged in a rotating manner, so that the suction effect is better, and the air is sucked in a rotating manner. The efficiency of the fan is increased by the fact that the air is sucked in depending on the rotational direction of the fan. In addition, the air in the indoor space can be in a dynamically rotating state.

Further, the first wind-guide plates on each surface may be individually controlled.

In the embodiment of the present invention, the second wind-guide plates may include a wind-guide door, the size of the wind-guide door may be matched with that of the blow-out port, and the wind-guide door may control the opening area of the blow-out port according to a control command from the control device.

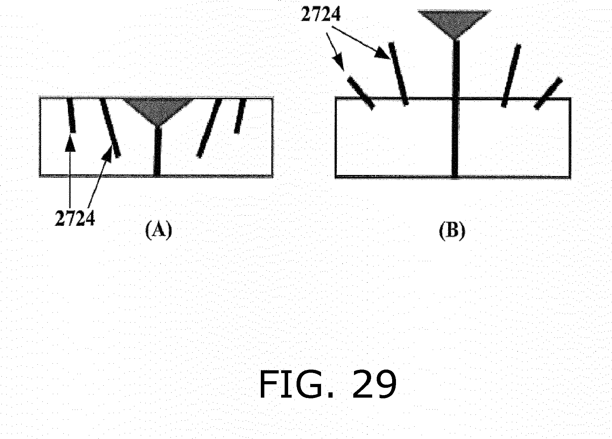

In the embodiment of the present invention, the blow-out port 2722 on the upper side of the inner case 2720 may be provided with third wind-guide plates the elevation of which can be adjusted. Fig. 29 is a schematic diagram of two states of the third wind-guide plates according to Embodiment 5 of the present invention. As shown in (A) and (B) of Fig. 29, the angle and the opening area of third wind-guide plates 2724 can be changed by adjusting the elevation of the third wind-guide plates, so that blow-out efficiency and purification efficiency can be improved.

As shown in Fig. 27, the filter body means 2730 includes a first filter screen, a second filter screen, and a third filter screen.

The first filter screen, the second filter screen, and the third filter screen are provided in parallel, the second filter screen is provided between the suction port and the blow-out port in the inner case 2720, and the first filter screen is provided in the inner case 2720.

Further, the first filter screen may be provided in the outer case 2710.

Also, Fig. 27 schematically shows each filter screen, but not its position in the purification equipment 2700.

Thus, the longer the path to be filtered is, the better the purification effect is, due to the stacked filter screens. When the up-down adjuster is controlled to raise the inner case, the suction port in the bottom portion of the peripheral side edge of the inner case first sucks a large amount of particulate matter with small particle size from the upper air inlet, and then, after having continued for one time period, moves to the lower air inlet to suck particulate matter with large particle size, and cooperates with the suction port in the bottom portion to thereby obtain a better purification effect.

In the embodiment of the present invention, there is a preset space between the second filter screen and the third filter screen. Thus, the second filter screen and the third filter screen are not tightly connected, and an active space is formed, so that there is a gap between the filter screens, and the purification space is optimized.

In the embodiment of the present invention, the suction port and the blow-out port may be provided with a lamp, and the length of the lamp is matched with the length of the corresponding suction port and blow-out port.

Thus, the movement of the particulate matter can be clearly seen due to the illumination of the lamp, and the comparison between the particulate matter at the suction port and the particulate matter at the blow-out port can be visualized, so that a better purification effect can be obtained. Further, it may be used as an illumination lamp at night. Certainly, the color and the length of the lamp can be changed, and music in the entertainment mode is played, so that a good effect can be obtained in terms of user experience.

In the embodiment of the present invention, the purification equipment 2700 may be purification equipment for household use, purification equipment for commercial use, or purification equipment for public use.

For example, the purification equipment 2700 may be used in a residential environment, a commercial environment such as an office, an office building, or a shopping mall, or a public environment such as a school.

As can be known from the above embodiment, since the purification equipment is controlled according to the concentration distribution of particulate matter with different particle sizes in the indoor space, targeted control of the particulate matter with different particle sizes can be performed, purification efficiency and speed can be increased, and good purification effect can be achieved quickly and highly efficiently.

The device and method in the embodiments of the present invention may be implemented by hardware, or may be implemented by a combination of hardware and software. The present invention relates to the following computer-readable program. When the program is executed by a logic unit, the logic unit may implement the above devices or components, or implement the above various methods or steps.

Embodiments of the present invention relate to a storage medium for storing the above program, such as a hard disk, a magnetic disk, an optical disc, a DVD, a flash memory, and the like.

It should be noted that, on the premise that the limitation of each step according to the present solution does not affect the implementation of the specific solution, the sequence of the steps is not limited, and the steps described later may be executed first, or may be executed later, or may be executed simultaneously. Any implementation of the present solution should be regarded as falling within the protection scope of the present application.

The present invention has been described above with reference to specific embodiments. However, it should be understood by those skilled in the art that these descriptions are merely exemplary and are not intended to limit the protection scope of the present invention. Based on the spirit and principle of the present invention, those skilled in the art can make various changes and modifications to the present invention, and these changes and modifications also fall within the scope of the present invention.

**CITATION LIST**

**PATENT LITERATURE**

> PTL 1: Chinese Patent Application Publication No. 106907791
> PTL 2: Chinese Patent No. 105659033
> PTL 3: Chinese Patent Application Publication No. 104913454
> PTL 4: Chinese Patent Application Publication No. 103604192

**Claims**

1. A control method for purification equipment comprising:

> a step of specifying a concentration distribution of particulate matter with different particle sizes in an indoor space; and
> a step of controlling, according to the concentration distribution of particulate matter with different particle sizes in the indoor space, at least one equipment parameter of the purification equipment.

2. The control method according to claim 1, wherein the step of specifying the concentration distribution of particulate matter with different particle sizes in the indoor space includes

> a step of acquiring temperature and/or humidity data of the indoor space, and
> a step of specifying concentrations of the particulate matter with different particle sizes corresponding to temperature and/or humidity at different heights according to a look-up table to obtain the concentration distribution of particulate matter with different particle sizes in the indoor space.

3. The control method according to claim 1, wherein the step of specifying the concentration distribution of particulate matter with different particle sizes in the indoor space includes

> a step of acquiring temperature and/or humidity data of the indoor space, and

a step of inputting the temperature and/or humidity data and height information into a first neural network model to obtain the concentration distribution of particulate matter with different particle sizes in the indoor space.

4. The control method according to claim 1, wherein the step of specifying the concentration distribution of particulate matter with different particle sizes in the indoor space includes

> a step of acquiring a sensor value for particulate matter with different particle sizes in a room, and
> a step of fitting the concentration distribution of particulate matter with different particle sizes in the indoor space based on the sensor value for the particulate matter with different particle sizes in the room.

5. The control method according to claim 1, wherein the step of specifying the concentration distribution of particulate matter with different particle sizes in the indoor space includes

> a step of acquiring temperature and/or humidity data of the indoor space, and
> a step of predicting, based on the temperature and/or humidity data of the indoor space, concentration distributions of particulate matter with different particle sizes in the indoor space at a plurality of times after a current time.

6. The control method according to claim 5, wherein the step of predicting, based on the temperature and/or humidity data of the indoor space, the concentration distributions of particulate matter with different particle sizes in the indoor space at a plurality of times after the current time includes a step of inputting the temperature and/or humidity data and height information into a second neural network model to obtain the concentration distributions of particulate matter with different particle sizes in the indoor space at a plurality of times after the current time.

7. The control method according to claim 5, wherein the step of predicting, based on the temperature and/or humidity data of the indoor space, the concentration distributions of particulate matter with different particle sizes in the indoor space at a plurality of times after the current time includes a step of inputting the temperature and/or humidity data and height information into a simulation model to obtain the concentration distributions of particulate matter with different particle sizes in the indoor space at a plurality of times after the current time.

8. The control method according to claim 5, wherein the step of controlling, according to the concentration distribution of particulate matter with different particle sizes in the indoor space, at least one equipment parameter of the purification equipment includes

a step of adjusting a control command for the at least one equipment parameter in real time according to the concentration distributions of particulate matter with different particle sizes in the indoor space at the plurality of times.

9. The control method according to claim 1, wherein the step of specifying the concentration distribution of particulate matter with different particle sizes in the indoor space includes

a step of acquiring an indoor layout diagrams of a room, and
a step of specifying the concentration distribution of particulate matter with different particle sizes in the indoor space while combining the indoor layout diagrams.

10. The control method according to claim 1, further comprising:

a step of specifying concentration distributions of pollutants other than the particulate matter in the indoor space; and
a step of controlling at least one equipment parameter of the purification equipment according to the concentration distributions of the other pollutants in the indoor space.

11. The control method according to claim 1, wherein the step of controlling, according to the concentration distribution of particulate matter with different particle sizes in the indoor space, at least one equipment parameter of the purification equipment includes a step of controlling a suction port and a blow-out port of the purification equipment according to the concentration distribution of particulate matter with different particle sizes in the indoor space.

12. The control method according to claim 1, further comprising a step of controlling at least one of opening/closing numbers, opening/closing ranges, and opening/closing angles of the suction port and the blow-out port based on a detection result of an obstacle around the purification equipment.

13. The control method according to claim 1, wherein the step of controlling, according to the concentration distribution of particulate matter with different particle sizes in the indoor space, at least one equipment parameter of the purification equipment includes

a step of controlling opening ranges of the suction port and the blow-out port according to the concentration distribution of particulate matter with different particle sizes in the indoor space, and
a step of changing, after operation of the purification equipment has continued for one time period, the opening ranges of the suction port and the blow-out port based on a detection result or a prediction result of the particulate matter with different particle sizes.

14. The control method according to claim 13, wherein

when a concentration of particulate matter with large particle size is large in a lower height region in a room, the opening ranges of the suction port and the blow-out port are controlled to be within the lower height region, and wind power is increased, and
after the operation of the purification equipment has continued for one time period, the opening ranges of the suction port and the blow-out port in height are gradually increased based on the detection result or the prediction result of the particulate matter.

15. The control method according to claim 13, wherein

when a concentration of particulate matter with large particle size is small in a lower height region in a room, the opening ranges of the suction port and the blow-out port are controlled to be opened to maximum ranges in height, and
after the operation of the purification equipment has continued for one time period, the opening ranges of the suction port and the blow-out port in height are gradually decreased based on the detection result or the prediction result of the particulate matter.

16. The control method according to claim 1, wherein the step of specifying the concentration distribution of particulate matter with different particle sizes in the indoor space includes

a step of acquiring an environmental parameter of the indoor space, and
a step of predicting, based on the environmental parameter, concentration distributions of particulate matter with different particle sizes in the indoor space at a plurality of times after a current time.

17. The control method according to claim 16, further comprising
a step of acquiring an indoor layout diagram of a room, wherein

the step of predicting, based on the environmental parameter, the concentration distributions of particulate matter with different particle sizes in the indoor space at a plurality of times after the current time includes

a step of predicting, based on the environmental parameter and the indoor layout diagram, the concentration distributions of particulate matter with different particle sizes in the indoor space at a plurality of times after the current time.

18. The control method according to claim 17, wherein

the indoor layout diagram includes at least one of elements: floor plan, furniture arrangement, orientation, and geographic location, and the indoor layout diagram is obtained based on a building information model and/or an indoor image photographed by a camera.

19. The control method according to claim 16, wherein

the environmental parameter includes at least one environmental parameter sequence of environmental parameters at a plurality of consecutive times at at least one position point in a room, and

the step of predicting, based on the environmental parameter, the concentration distributions of particulate matter with different particle sizes in the indoor space at a plurality of times after the current time includes

a step of inputting the at least one environmental parameter sequence into a third neural network model or a simulation model, and outputting concentration distributions of particulate matter with different particle sizes in the indoor space at a plurality of times after the current time.

20. The control method according to claim 19, wherein

the environmental parameters include four environmental parameter sequences of environmental parameters at eight consecutive times at four position points in the room, and

the step of predicting, based on the environmental parameter, the concentration distributions of particulate matter with different particle sizes in the indoor space at a plurality of times after the current time includes

a step of inputting the four environmental parameter sequences, as four channels, into the third neural network model or the simulation model, and outputting the concentration distributions of particulate matter with different particle sizes in the indoor space at a plurality of times after the current time.

21. The control method according to claim 16, wherein the environmental parameter is obtained by a plurality of sensors arranged at different positions in a room or at least one sensor movable in the room.

22. The control method according to claim 16, wherein the environmental parameter includes a plurality of environmental parameters at different heights in a room.

23. The control method according to claim 19, wherein the step of specifying the concentration distribution of particulate matter with different particle sizes in the indoor space includes

a step of inputting the at least one environmental parameter sequence, a state of indoor environment equipment, and/or user behavior into the third neural network model or the simulation model to acquire the concentration distributions of particulate matter with different particle sizes in the indoor space at a plurality of times after the current time.

24. The control method according to claim 23, wherein the at least one environmental parameter sequence includes a plurality of particulate matter data sequences at different positions in the room.

25. The control method according to claim 16, wherein the environmental parameter includes at least one of temperature, humidity, concentration of particulate matter with different particle sizes, VOC concentration, formaldehyde concentration, odor concentration, and carbon dioxide concentration.

26. A control method for purification equipment, comprising:

a step of acquiring an environmental parameter of an indoor space;
a step of predicting, based on the environmental parameter, pollutant concentration distributions at a plurality of times after a current time; and
a step of controlling at least one equipment parameter of the purification equipment according to the pollutant concentration distributions at a plurality of times after the current time.

27. The control method according to claim 26, further comprising

a step of acquiring an indoor layout diagram of a room,
wherein the step of predicting, based on the environmental parameter, the pollutant concentration distributions at a plurality of times after the current time includes
a step of predicting, based on the environmental parameter and the indoor layout diagram, the pollutant concentration distributions at a plurality of times after the current time.

28. The control method according to claim 27, wherein

the indoor layout diagram includes at least one of elements: floor plan, furniture arrangement, orientation, and geographic location, and
the indoor layout diagram is obtained based on a building information model and/or an indoor image photographed by a camera.

29. The control method according to claim 26, wherein

the environmental parameter include at least one environmental parameter sequence of environmental parameters at a plurality of consecutive times at at least one position point in a room, and
the step of predicting, based on the environmental parameter, the pollutant concentration distributions at a plurality of times after the current time includes
a step of inputting the at least one environmental parameter sequence into a prediction model, and outputting the pollutant concentration distributions at a plurality of times after the current time.

30. The control method according to claim 29, wherein

the environmental parameters include four environmental parameter sequences of environmental parameters at eight consecutive times at four position points in a room, and
the step of predicting, based on the environmental parameter, the pollutant concentration distributions at a plurality of times after the current time includes
a step of inputting the four environmental parameter sequences, as four channels, into the prediction model, and outputting the pollutant concentration distributions at a plurality of times after the current time.

31. The control method according to claim 26, wherein the environmental parameter is obtained by a plurality of sensors arranged at different positions in a room or at least one sensor movable in the room.

32. The control method according to claim 26, wherein the environmental parameter includes a plurality of environmental parameters at different heights in a room.

33. The control method according to claim 29, wherein the step of predicting, based on the environmental parameter, the pollutant concentration distributions at a plurality of times after the current time includes a step of inputting the at least one environmental parameter sequence, a state of indoor environment equipment, and/or user behavior into the prediction model, and outputting the pollutant concentration distributions at a plurality of times after the current time.

34. The control method according to claim 29, wherein the prediction model is a deep neural network model or a simulation model.

35. The control method according to claim 26, further comprising

a step of specifying the number of pollutants at a plurality of times after the current time according to the pollutant concentration distributions at the plurality of times after the current time,
wherein the step of controlling at least one equipment parameter of the purification equipment according to the pollutant concentration distributions at a plurality of times after the current time includes
a step of controlling at least one equipment parameter of the purification equipment based on the number of pollutants at a plurality of times after the current time.

36. The control method according to claim 26, wherein the step of controlling at least one equipment parameter of the purification equipment according to the pollutant concentration distributions includes
a step of controlling a suction port and a blow-out port of the purification equipment according to the pollutant concentration distribution.

37. The control method according to claim 26, further comprising
a step of controlling at least one of opening/closing numbers, opening/closing ranges, and opening/closing angles of a suction port and a blow-out port based on a detection result of an obstacle around the purification equipment.

38. The control method according to claim 26, wherein the step of controlling at least one equipment parameter of the purification equipment according to the pollutant concentration distributions at a plurality of times after the current time includes
a step of controlling opening/closing numbers, opening/closing ranges, or opening/closing angles of a suction port and a blow-out port to increase or decrease accordingly when it is specified that a pollutant tends to increase or decrease according to the pollutant concentration distributions at a plurality of times after the current time.

**39.** The control method according to claim 35, wherein the step of controlling at least one equipment parameter of the purification equipment based on the number of pollutants at a plurality of times after the current time includes a step of controlling opening/closing numbers, opening/closing ranges, or opening/closing angles of a suction port and a blow-out port to increase or decrease accordingly when it is specified that a pollutant tends to increase or decrease according to the number of pollutants at a plurality of times after the current time.

**40.** The control method according to claim 26, wherein the step of controlling at least one equipment parameter of the purification equipment according to the pollutant concentration distributions at a plurality of times after the current time includes a step of specifying at least one control strategy and a time required for the purification equipment to implement the control strategy according to the pollutant concentration distributions at a plurality of times after the current time.

**41.** The control method according to claim 40, wherein the step of controlling at least one equipment parameter of the purification equipment according to the pollutant concentration distributions at a plurality of times after the current time further includes

a step of specifying and providing at least one control strategy to a user, and
a step of controlling the purification equipment according to a control strategy selected by the user.

**42.** The control method according to claim 40, wherein the step of controlling at least one equipment parameter of the purification equipment according to the pollutant concentration distributions at a plurality of times after the current time further includes

a step of automatically selecting a control strategy with a shortest required time from the at least one control strategy, and
a step of controlling the purification equipment according to the control strategy automatically selected.

**43.** The control method according to any one of claims 26 to 42, wherein the environmental parameter includes at least one of temperature, humidity, concentration of particulate matter with different particle sizes, VOC concentration, formaldehyde concentration, odor concentration, and carbon dioxide concentration.

**44.** The control method according to claim 1 or 26, further comprising
a step of starting, when noise of the purification equipment is greater than a preset threshold, a noise elimination module.

**45.** The control method according to any one of claims 1 to 42, wherein the equipment parameter is

at least one of opening/closing number, opening/closing range, and opening/closing angle of a suction port,
at least one of opening/closing number, opening/closing range, and opening/closing angle of a blow-out port,
wind power magnitude, or
an operating mode.

**46.** A control device for purification equipment, comprising:

a specifying unit configured to specify a concentration distribution of particulate matter with different particle sizes in an indoor space; and
a first control unit configured to control at least one equipment parameter of the purification equipment according to the concentration distribution of particulate matter with different particle sizes in the indoor space.

**47.** A control device for purification equipment, comprising:

an acquisition unit configured to acquire an environmental parameter of an indoor space;
a prediction unit configured to predict, based on the environmental parameter, pollutant concentration distributions at a plurality of times after a current time; and
a second control unit configured to control at least one equipment parameter of the purification equipment according to the pollutant concentration distributions at a plurality of times after the current time.

**48.** Purification equipment comprising:

the control device for purification equipment according to claim 46 or 47.

**49.** The purification equipment according to claim 48, further comprising:

an outer case having a suction port provided in a lower end portion and a bottom portion of a peripheral side edge; and
an inner case having a blow-out port provided on a peripheral side edge and an upper side,

wherein

the inner case is fitted into the outer case and is adjusted upward or downward by an up-down adjuster,
the purification equipment further includes
a filter body means provided in the inner case, and

a fan provided in the inner case or the outer case,

the suction port is provided with a first wind-guide plate,
the blow-out port is provided with a second wind-guide plate, and
the control device controls at least one of the suction port, the blow-out port, the up-down adjuster, the first wind-guide plate, and the second wind-guide plate according to a control command.

50. The purification equipment according to claim 49, wherein

the first wind-guide plate is arranged in the inner case,
the first wind-guide plate is arranged on the peripheral side edge of the inner case and is perpendicular to an upper side edge of the inner case, and
the first wind-guide plate is rotationally distributed.

51. The purification equipment according to claim 49, wherein

the second wind-guide plate includes a wind-guide door,
a size of the wind-guide door is matched with a size of the blow-out port, and
the wind-guide door controls an opening area of the blow-out port according to a control command from the control device.

52. The purification equipment according to claim 50, wherein

the filter body means includes a first filter screen, a second filter screen, and a third filter screen,
the first filter screen, the second filter screen, and the third filter screen are provided in parallel,
the second filter screen is arranged between a suction port and the blow-out port in the inner case, and
the first filter screen is arranged in the outer case or the inner case.

53. The purification equipment according to claim 52, wherein a preset space is provided between the second filter screen and the third filter screen.

101

SPECIFY CONCENTRATION DISTRIBUTION OF PARTICULATE MATTER WITH DIFFERENT PARTICLE SIZES IN INDOOR SPACE

102

CONTROL AT LEAST ONE EQUIPMENT PARAMETER OF PURIFICATION EQUIPMENT ACCORDING TO CONCENTRATION DISTRIBUTION OF PARTICULATE MATTER WITH DIFFERENT PARTICLE SIZES IN INDOOR SPACE

103

SPECIFY CONCENTRATION DISTRIBUTIONS OF POLLUTANTS OTHER THAN PARTICULATE MATTER IN INDOOR SPACE

104

CONTROL, ACCORDING TO CONCENTRATION DISTRIBUTIONS OF OTHER POLLUTANTS IN INDOOR SPACE, AT LEAST ONE EQUIPMENT PARAMETER OF PURIFICATION EQUIPMENT

105

CONTROL, BASED ON DETECTION RESULT OF OBSTACLES AROUND PURIFICATION EQUIPMENT, AT LEAST ONE OF OPENING/CLOSING NUMBERS, OPENING/CLOSING RANGES, AND OPENING/CLOSING ANGLES OF SUCTION PORT AND BLOW-OUT PORT

FIG. 1

201

ACQUIRE TEMPERATURE AND/OR
HUMIDITY DATA OF INDOOR SPACE

SPECIFY, ACCORDING TO LOOK-UP TABLE,
CONCENTRATIONS OF PARTICULATE MATTER WITH
DIFFERENT PARTICLE SIZES CORRESPONDING TO
TEMPERATURE AND/OR HUMIDITY AT
DIFFERENT HEIGHTS TO OBTAIN CONCENTRATION
DISTRIBUTION OF PARTICULATE MATTER
WITH DIFFERENT PARTICLE SIZES IN INDOOR SPACE

202

# FIG. 2

| | | DISTRIBUTION POSITION OF PARTICULATE MATTER WITH DIFFERENT PARTICLE SIZES (m) | | | | | |
|---|---|---|---|---|---|---|---|
| HUMIDITY (%) | TEMPERATURE (°C) | PM0.1 | PM0.5 | PM1 | PM1.5 | PM2 | PM2.5 |
| 20 | 20 | 3.3 | 3.3 | 3.3 | 3.3 | 3.3 | 3.3 |
| 23 | 21 | 3.2 | 3.15 | 3.2 | 3.2 | 3.2 | 3.2 |
| 26 | 22 | 3.1 | 3 | 3.2 | 3.2 | 3.2 | 3.2 |
| 29 | 23 | 3 | 2.85 | 3.2 | 3.2 | 3.2 | 3.2 |
| 32 | 24 | 2.9 | 2.7 | 3.2 | 3.2 | 3.2 | 3.2 |
| 35 | 25 | 2.8 | 2.55 | 3.1 | 3.2 | 3.2 | 3.2 |
| 38 | 26 | 2.7 | 2.4 | 2.9 | 3.2 | 3.1 | 3.1 |
| 41 | 27 | 2.6 | 2.25 | 2.7 | 3.2 | 3.1 | 3.1 |
| 44 | 28 | 2.5 | 2.1 | 2.5 | 3.2 | 3.1 | 3.1 |
| 47 | 29 | 2.4 | 1.95 | 2.3 | 3.2 | 3.1 | 3.1 |
| 50 | 30 | 2.3 | 1.8 | 2.1 | 3.1 | 3 | 3 |
| 53 | 31 | 2.2 | 1.65 | 1.9 | 3 | 2.9 | 2.8 |
| 56 | 32 | 2.1 | 1.5 | 1.7 | 2.9 | 2.8 | 2.6 |
| 59 | 33 | 2 | 1.35 | 1.5 | 2.8 | 2.7 | 2.4 |
| 62 | 34 | 1.9 | 1.2 | 1.3 | 2.7 | 2.6 | 2.2 |
| 65 | 35 | 1.8 | 1.05 | 1.1 | 2.6 | 2.5 | 2 |
| 68 | 36 | 1.7 | 0.9 | 0.9 | 2.5 | 2.4 | 1.8 |
| 71 | 37 | 1.6 | 0.75 | 0.7 | 2.4 | 2.3 | 1.6 |
| 74 | 38 | 1.5 | 0.6 | 0.5 | 2.3 | 2.2 | 1.4 |
| 77 | 39 | 1.4 | 0.45 | 0.3 | 2.2 | 2.1 | 1.2 |
| 80 | 40 | 1.3 | 0.3 | 0.1 | 2.1 | 2 | 1 |

# FIG. 3

NUMERICAL CONCENTRATION OF
PARTICULATE MATTER IN ROOM (M/m$^{-3}$)

| | /m | 0.5µm | 1µm | 2µm | 3µm | 5µm | 10µm |
|---|---|---|---|---|---|---|---|
| NATURAL VENTILATION | 0.5 | 27300886 | 3700895 | 1063289 | 45921 | 7522 | 14208 |
| | 1 | 26552056 | 3782836 | 1082571 | 46050 | 7039 | 12148 |
| | 1.5 | 26492622 | 3616610 | 1030323 | 43614 | 7805 | 13137 |
| | 2 | 26206891 | 3875349 | 1095720 | 43249 | 6333 | 9594 |
| | AVERAGE VALUE | 26638114 | 3743923 | 1067976 | 44708 | 7174 | 12271 |
| NON-VENTILATION | 0.5 | 25025656 | 3045749 | 877322 | 42550 | 5556 | 9888 |
| | 1 | 25283253 | 3088250 | 887775 | 40594 | 5491 | 9411 |
| | 1.5 | 24699113 | 3040434 | 865333 | 38016 | 5244 | 6251 |
| | 2 | 25954773 | 2977079 | 839800 | 37310 | 5403 | 5244 |
| | AVERAGE VALUE | 25240699 | 30307878 | 867557 | 39617 | 5423 | 7698 |

# FIG. 4

501

ACQUIRE TEMPERATURE AND/OR
HUMIDITY DATA OF INDOOR SPACE

502

INPUT TEMPERATURE AND/OR HUMIDITY DATA AND
HEIGHT INFORMATION INTO FIRST NEURAL NETWORK
MODEL TO ACQUIRE CONCENTRATION DISTRIBUTION
OF PARTICULATE MATTER WITH DIFFERENT PARTICLE
SIZES IN INDOOR SPACE

# FIG. 5

601

INPUT CURRENT TEMPERATURE, HUMIDITY,
AND HEIGHT PARAMETERS

602

PERFORM TRAINING WITH ARRANGED
FULLY CONNECTED NEURAL NETWORK

603

STORE MODEL AFTER TRAINING OF
MODEL IS COMPLETED

# FIG. 6

FIG. 7

801

ACQUIRE SENSOR VALUE FOR PARTICULATE
MATTER WITH DIFFERENT PARTICLE SIZES
IN ROOM

802

FIT, BASED ON SENSOR VALUE FOR PARTICULATE
MATTER WITH DIFFERENT PARTICLE SIZES IN ROOM,
CONCENTRATION DISTRIBUTION OF
PARTICULATE MATTER WITH
DIFFERENT PARTICLE SIZES IN INDOOR SPACE

FIG. 8

FIG. 9

ACQUIRE TEMPERATURE AND/OR
HUMIDITY DATA OF INDOOR SPACE

1001

PREDICT, BASED ON TEMPERATURE AND/OR HUMIDITY
DATA OF INDOOR SPACE, CONCENTRATION
DISTRIBUTIONS OF PARTICULATE MATTER WITH
DIFFERENT PARTICLE SIZES IN INDOOR SPACE AT
A PLURALITY OF TIMES AFTER CURRENT TIME

1002

FIG. 10

1101

ACQUIRE ENVIRONMENTAL PARAMETER
OF INDOOR SPACE

1102

PREDICT, BASED ON ENVIRONMENTAL PARAMETER,
CONCENTRATION DISTRIBUTIONS OF PARTICULATE
MATTER WITH DIFFERENT PARTICLE SIZES IN INDOOR
SPACE AT A PLURALITY OF TIMES AFTER CURRENT TIME

FIG. 11

STATE OF INDOOR
ENVIRONMENT EQUIPMENT

A PLURALITY OF
PARTICULATE
MATTER DATA
SEQUENCES

THIRD NEURAL
NETWORK
MODEL

CONCENTRATION
DISTRIBUTIONS OF
PARTICULATE MATTER
WITH DIFFERENT
PARTICLE SIZES IN
INDOOR SPACE AT A
PLURALITY OF TIMES

USER BEHAVIOR

FIG. 12

1301

ACQUIRE INDOOR LAYOUT
DIAGRAMS OF ROOM

1302

SPECIFY CONCENTRATION DISTRIBUTION OF
PARTICULATE MATTER WITH DIFFERENT
PARTICLE SIZES IN INDOOR SPACE WHILE
COMBINING INDOOR LAYOUT DIAGRAMS

FIG. 13

ONE SIDE CLOSED    TWO SIDES CLOSED

EXAMPLE OF THREE SIDES

90° TO 180° CLOSED

EXAMPLE OF CIRCLE

ONE SIDE CLOSED    TWO SIDES CLOSED

EXAMPLE OF FOUR SIDES FULLY OPENED

# FIG. 14

1501

CONTROL OPENING RANGES OF SUCTION PORT AND BLOW-OUT PORT ACCORDING TO CONCENTRATION DISTRIBUTION OF PARTICULATE MATTER WITH DIFFERENT PARTICLE SIZES IN INDOOR SPACE

1502

CHANGE, AFTER OPERATION OF PURIFICATION EQUIPMENT HAS CONTINUED FOR ONE TIME PERIOD, OPENING RANGES OF SUCTION PORT AND BLOW-OUT PORT BASED ON DETECTION RESULT OR PREDICTION RESULT OF PARTICULATE MATTER WITH DIFFERENT PARTICLE SIZES

# FIG. 15

1601

ACQUIRE ENVIRONMENTAL PARAMETER
OF INDOOR SPACE

1602

PREDICT, BASED ON ENVIRONMENTAL
PARAMETER, POLLUTANT CONCENTRATION
DISTRIBUTIONS AT A PLURALITY OF
TIMES AFTER CURRENT TIME

1603

CONTROL AT LEAST ONE EQUIPMENT PARAMETER OF
PURIFICATION EQUIPMENT ACCORDING TO POLLUTANT
CONCENTRATION DISTRIBUTIONS AT A PLURALITY
OF TIMES AFTER CURRENT TIME

1604

CONTROL, BASED ON DETECTION RESULT OF
OBSTACLES AROUND PURIFICATION EQUIPMENT,
AT LEAST ONE OF OPENING/CLOSING NUMBERS,
OPENING/CLOSING RANGES, AND OPENING/CLOSING
ANGLES OF SUCTION PORT AND BLOW-OUT PORT

FIG. 16

1701

ACQUIRE INPUT OF FOUR CHANNELS CORRESPONDING
TO FOUR POSITION POINTS, WHERE INPUT OF
EACH CHANNEL IS ENVIRONMENTAL PARAMETER DATA
AT EIGHT CONSECUTIVE TIME POINTS

1702

CAUSE EACH CHANNEL TO PASS THROUGH
LONG SHORT-TERM MEMORY (LSTM) NEURAL NETWORK
OR GATED RECURRENT UNIT (GRU) NEURAL NETWORK
TO CALCULATE VALUE OF ONE EXTRACTED FEATURE

1703

SUPERPOSE EACH CHANNEL OBTAINED IN STEP 202
UNIT BY UNIT SO THAT, AFTER SUPERPOSITION,
OUTPUT OF FOUR UNITS WITH FUTURE INFORMATION
(I.E., TEMPORAL FEATURE LAYER) IS OBTAINED

# FIG. 17

[8:00 C1T1 C1H1], [9:00 C1T2 C1H2], [10:00 C1T3 C1H3], [11:00 C1T4 C1H4],
[12:00 C1T5 C1H5], [13:00 C1T6 C1H6], [14:00 C1T7 C1H7], [15:00 C1T8 C1H8]

[8:00 C2T1 C2H1], [9:00 C2T2 C2H2], [10:00 C2T3 C2H3], [11:00 C2T4 C2H4],
[12:00 C2T5 C2H5], [13:00 C2T6 C2H6], [14:00 C2T7 C2H7], [15:00 C2T8 C2H8]

[8:00 C3T1 C3H1], [9:00 C3T2 C3H2], [10:00 C3T3 C3H3], [11:00 C3T4 C3H4],
[12:00 C3T5 C3H5], [13:00 C3T6 C3H6], [14:00 C3T7 C3H7], [15:00 C3T8 C3H8]

[8:00 C4T1 C4H1], [9:00 C4T2 C4H2], [10:00 C4T3 C4H3], [11:00 C4T4 C4H4],
[12:00 C4T5 C4H5], [13:00 C4T6 C4H6], [14:00 C4T7 C4H7], [15:00 C4T8 C4H8]

# FIG. 18

OUTPUT LAYER

LSTM UNIT

INPUT
LAYER

t=0
INPUT TH DATA

t=1
INPUT TH DATA

t=2
INPUT TH DATA

## FIG. 19

STATE OF INDOOR
ENVIRONMENT EQUIPMENT

AT LEAST ONE
ENVIRONMENTAL
PARAMETER
SEQUENCE

PREDICTION
MODEL

USER
BEHAVIOR

POLLUTANT
CONCENTRATION
DISTRIBUTIONS AT A
PLURALITY OF TIMES
AFTER CURRENT TIME

## FIG. 20

2101

ACQUIRE ENVIRONMENTAL
PARAMETER OF INDOOR SPACE

2102

PREDICT, BASED ON ENVIRONMENTAL
PARAMETER, POLLUTANT CONCENTRATION
DISTRIBUTIONS AT A PLURALITY OF
TIMES AFTER CURRENT TIME

2103

SPECIFY, ACCORDING TO POLLUTANT CONCENTRATION
DISTRIBUTIONS AT A PLURALITY OF TIMES AFTER
CURRENT TIME, NUMBER OF POLLUTANTS AT
A PLURALITY OF TIMES AFTER CURRENT TIME

2104

CONTROL AT LEAST ONE EQUIPMENT PARAMETER
OF PURIFICATION EQUIPMENT BASED ON NUMBER
OF POLLUTANTS AT A PLURALITY OF TIMES
AFTER CURRENT TIME

FIG. 21

2201

SPECIFY, ACCORDING TO POLLUTANT CONCENTRATION
DISTRIBUTIONS AT A PLURALITY OF TIMES AFTER CURRENT TIME,
AT LEAST ONE CONTROL STRATEGY AND TIME REQUIRED
FOR PURIFICATION EQUIPMENT
TO IMPLEMENT CONTROL STRATEGY

2202

SPECIFY AND PROVIDE AT LEAST
ONE CONTROL STRATEGY TO USER

2203

CONTROL PURIFICATION EQUIPMENT
ACCORDING TO CONTROL STRATEGY
SELECTED BY USER

# FIG. 22

2301

SPECIFY, ACCORDING TO POLLUTANT CONCENTRATION
DISTRIBUTIONS AT A PLURALITY OF TIMES AFTER CURRENT TIME,
AT LEAST ONE CONTROL STRATEGY AND TIME REQUIRED FOR
PURIFICATION EQUIPMENT TO IMPLEMENT CONTROL STRATEGY

2302

AUTOMATICALLY SELECT CONTROL STRATEGY
WITH SHORTEST REQUIRED TIME FROM
AT LEAST ONE CONTROL STRATEGY

2303

CONTROL PURIFICATION EQUIPMENT
ACCORDING TO AUTOMATICALLY SELECTED
CONTROL STRATEGY

# FIG. 23

ACQUIRE HISTORICAL DATA OF POLLUTANT
CONCENTRATION DISTRIBUTION
— 2401

INPUT HISTORICAL DATA OF POLLUTANT
CONCENTRATION DISTRIBUTION INTO PREDICTION
MODEL BASED ON LSTM UNIT, AND OUTPUT
POLLUTANT CONCENTRATION DISTRIBUTIONS
AT DIFFERENT TIMES IN FUTURE
— 2402

CALCULATE NUMBER OF POLLUTANTS
AT DIFFERENT TIMES IN FUTURE
— 2403

OUTPUT CONTROL COMMAND FOR
SEQUENTIALLY INCREASING OR DECREASING
AREA OF BLOW-OUT PORT
— 2404

PERFORM CONTROL ACCORDING TO
CONTROL COMMAND SO THAT AREA OF
BLOW-OUT PORT IS CONTROLLED TO
GRADUALLY INCREASE OR DECREASE
— 2405

# FIG. 24

2500

CONTROL DEVICE FOR
PURIFICATION EQUIPMENT

2501

SPECIFYING
UNIT

2502

FIRST
CONTROL UNIT

FIG. 25

2600

CONTROL DEVICE FOR
PURIFICATION EQUIPMENT

2601

ACQUISITION
UNIT

2602

PREDICTION
UNIT

2603

SECOND
CONTROL UNIT

FIG. 26

2700

2721    2722    2721

THIRD
FILTER
SCREEN

2720    SECOND    2730
FILTER
SCREEN

MOTOR

FIRST
FILTER
SCREEN

2723    2723

2710

2711    2711

2712

FIG. 27

(A)

2711

(B)

2713

(C)

2713

FIG. 28

2724

2724

(A)

(B)

FIG. 29

## INTERNATIONAL SEARCH REPORT

| International application No. |
|---|
| **PCT/JP2022/024223** |

### A. CLASSIFICATION OF SUBJECT MATTER

*F24F 11/64*(2018.01)i; *F24F 8/108*(2021.01)i; *F24F 11/70*(2018.01)i; *F24F 11/79*(2018.01)i; *F24F 110/10*(2018.01)n; *F24F 110/20*(2018.01)n; *F24F 110/65*(2018.01)n

FI: F24F11/64; F24F11/70; F24F11/79; F24F8/108; F24F110:65; F24F110:10; F24F110:20

According to International Patent Classification (IPC) or to both national classification and IPC

### B. FIELDS SEARCHED

Minimum documentation searched (classification system followed by classification symbols)

F24F11/64; F24F8/108; F24F11/70; F24F11/79; F24F110/10; F24F110/20; F24F110/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-95768 A (PANASONIC CORPORATION) 07 May 2009 (2009-05-07) paragraph [0044]-[0059], fig. 1-9 | 1, 11, 13-15, 45-46, 48 |
| Y | | 2-10, 12, 16-25, 44 |
| Y | JP 2001-99462 A (MATSUSHITA ELECTRIC INDUSTRIAL CO., LTD.) 13 April 2001 (2001-04-13) paragraphs [0012]-[0045], fig. 1-8 | 2-9, 16-25 |
| Y | JP 2020-85547 A (NIKKEN SEKKEI RESEARCH INSTITUTE) 04 June 2020 (2020-06-04) paragraph [0039]-[0051], fig. 7-12 | 10 |
| Y | WO 2015/063867 A1 (MITSUBISHI ELECTRIC CORPORATION) 07 May 2015 (2015-05-07) paragraph [0042] | 12 |
| Y | JP 2000-205615 A (KAWAI MUSICAL INSTR MFG CO., LTD.) 28 July 2000 (2000-07-28) paragraph [0033], fig. 5 | 44 |

☑ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | Telephone No. |

Form PCT/ISA/210 (second sheet) (January 2015)

## INTERNATIONAL SEARCH REPORT

| International application No. |
| --- |
| **PCT/JP2022/024223** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-182638 A (TAKENAKA KOMUTEN CO., LTD.) 12 November 2020 (2020-11-12) paragraphs [0010]-[0078], fig. 1-5 | 1-25, 44-46, 48 |
| A | CN 111814956 A (HARBIN ENGINEERING UNIVERSITY) 23 October 2020 (2020-10-23) entire text, all drawings | 1-25, 44-46, 48 |

Form PCT/ISA/210 (second sheet) (January 2015)

**INTERNATIONAL SEARCH REPORT**

International application No.

**PCT/JP2022/024223**

| Box No. III | Observations where unity of invention is lacking (Continuation of item 3 of first sheet) |
| --- | --- |

This International Searching Authority found multiple inventions in this international application, as follows:

Document 1: JP 2009-95768 A (PANASONIC CORP.) 07 May 2009 (2019-05-07)
        paragraphs [0044]-[0059], fig. 1-9 (Family: none)

The claims are classified into the following three inventions.

(Invention 1) Claims 1-25, the sections of claims 44-45 directly or indirectly citing claim 1, claim 46, and the sections of claims 48 citing claim 46

Document 1 discloses "a control method for a purification device, the method including: a step for identifying a concentration distribution in an indoor space of a particulate substance having different particle diameters; and a step for controlling at least one device parameter of the purification device in accordance with the concentration distribution in the indoor space of the particulate substance having different particle diameters" (see, in particular, paragraphs [0044]-[0059], fig .1-9). Claim 1 lacks novelty in the light of document 1 and thus does not have special technical features. However, claim 2 depending from claim 1 has the special technical feature of "a control method including: a step for identifying a concentration distribution in an indoor space of a particulate substance having different particle diameters; and a step for controlling at least one device parameter of the purification device in accordance with the concentration distribution in the indoor space of the particulate substance having different particle diameters, wherein the step for identifying the concentration distribution in the indoor space of the particulate substance having different particle diameters includes a step for acquiring temperature data and/or humidity data of the indoor space, and a step for identifying the concentration of the particulate substance having different particle diameters corresponding to the temperature and/or humidity at different heights using a look-up table, to acquire the concentration distribution in the indoor space of the particulate substance having different particle diameters." The sections of claim 45 citing claim 2 also have the same special technical feature as claim 2. Therefore, claims 1-2 and the sections of claim 45 citing claim 2 are classified as invention 1.

Furthermore, claims 3-25 and the sections of claims 44-45 directly or indirectly citing claim 1 are dependent claims of claim 1 and are inventively linked with claim 1, and thus are classified as invention 1.

Additionally, claim 46 and the sections of claim 48 citing claim 46 are substantially identical to or similarly closely related to claim 1, and thus are classified as invention 1.

(Invention 2) Claims 26-43 and the sections of claims 44-45 directly or indirectly citing claim 26, claim 47, and the sections of claim 48 citing claim 47

Claims 26-43 and the sections of claims 44-45 directly or indirectly citing claim 26 cannot be said to share the same or corresponding special technical feature with claim 2 classified as invention 1.

Furthermore, claims 26-43 and the sections of claims 44-45 directly or indirectly citing claim 26 do not depend from claim 1. Additionally, claims 26-43 and the sections of claims 44-45 directly or indirectly citing claim 26 are not substantially identical to or similarly closely related to any of the claims classified as invention 1.

Therefore, claims 26-43 and the sections of claims 44-45 directly or indirectly citing claim 26 cannot be classified as invention 1.

Claims 26-43 and the sections of claims 44-45 directly or indirectly citing claim 26 are classified as invention 2 as a result of having the special technical feature of "a control method for a purification device, the method including: a step for acquiring an environmental parameter of an indoor space; a step for predicting a concentration distribution of a contaminant at a plurality of times from the current time onwards on the basis of the environmental parameter; and a step for controlling at least one device parameter of the purification device in accordance with the concentration distribution of the contaminant at the plurality of times from the current time onwards."

Furthermore, claim 47 and the sections of claim 48 citing claim 47 are substantially identical to or similarly closely related to claim 26, and thus are classified as invention 2.

(Invention 3) Claims 49-53

Claims 49-53 cannot be said to share the same or corresponding special technical features with claim 2 classified as invention 1 or claim 26 classified as invention 2.

Furthermore, claims 49-53 do not depend from claim 1 or 26. Additionally, claims 49-53 are not substantially identical to or similarly closely related to any of the claims classified as invention 1 or 2.

Therefore, claims 49-53 cannot be classified as either invention 1 or 2.

Claims 49-53 are classified as invention 3 as a result of having the special technical feature of "a purification device comprising: an exterior case provided with a suction port on a bottom and a lower end at a peripheral edge; and an interior case provided with a blowout port at an upper side and a peripheral edge, wherein the interior case

**INTERNATIONAL SEARCH REPORT**

International application No.

**PCT/JP2022/024223**

| Box No. III | Observations where unity of invention is lacking (Continuation of item 3 of first sheet) |
| --- | --- |

is fitted inside the exterior case and the lifting/lowering thereof is adjusted by an up/down adjustment means, the purification device further comprises a filter body means provided inside the interior case, a blower provided inside the interior case or exterior case, and a control device, the suction port is provided with a first air guide plate, the blowout port is provided with a second air guide plate, and the control device controls at least one among the suction port, the blowout port, the up/down adjustment means, the first air guide plate, and the second air guide plate in accordance with a control command."

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-25, 44-46, 48**

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/024223**

| Patent document cited in search report | | | Publication date (day/month/year) | Patent family member(s) | | | Publication date (day/month/year) |
|---|---|---|---|---|---|---|---|
| JP | 2009-95768 | A | 07 May 2009 | (Family: none) | | | |
| JP | 2001-99462 | A | 13 April 2001 | (Family: none) | | | |
| JP | 2020-85547 | A | 04 June 2020 | (Family: none) | | | |
| WO | 2015/063867 | A1 | 07 May 2015 | TW paragraph [0042] CN | 201516349 105683667 | A A | |
| JP | 2000-205615 | A | 28 July 2000 | (Family: none) | | | |
| JP | 2020-182638 | A | 12 November 2020 | (Family: none) | | | |
| CN | 111814956 | A | 23 October 2020 | (Family: none) | | | |

Form PCT/ISA/210 (patent family annex) (January 2015)

**EP 4 357 691 A1**

**REFERENCES CITED IN THE DESCRIPTION**

**Patent documents cited in the description**

- CN 106907791
- CN 105659033
- CN 104913454
- CN 103604192